# EUROPÄISCHE PATENTSCHRIFT

(11) **EP 1 237 748 B1**
(45) Veröffentlichungstag und Bekanntmachung des Hinweises auf die Patenterteilung: **01.03.2006**
(21) Anmeldenummer: 00983327.8
(22) Anmeldetag: 14.12.2000
(51) Int. Cl.: B60N 2/235

(54) **RASTBESCHLAG FÜR EINEN FAHRZEUGSITZ, INSBESONDERE FÜR EINEN KRAFTFAHRZEUGSITZ**
DETENT FITTING FOR A VEHICLE SEAT, ESPECIALLY FOR A SEAT OF A MOTOR VEHICLE
ARMATURE D'ARRET POUR SIEGE DE VEHICULE, NOTAMMENT VEHICULE A MOTEUR

(30) Priorität: 17.12.1999 DE 19960878
(43) Veröffentlichungstag der Anmeldung: 11.09.2002
(73) Patentinhaber: KEIPER GmbH & Co. KG, 67657 Kaiserslautern (DE)
(72) Erfinder: EPPERT, Dietmar, 42857 Remscheid (DE)
(74) Vertreter: Ludewig, Karlheinrich
(86) Internationale Anmeldenummer: PCT/EP2000/012735
(87) Internationale Veröffentlichungsnummer: WO 2001/044010

(56) Entgegenhaltungen:
- US-A- 3 953 069
- US-A- 4 660 886
- US-A- 4 995 669
- US-A- 5 522 643
- US-A- 5 788 330

## Beschreibung

Die Erfindung bezieht sich auf einen Rastbeschlag für einen Fahrzeugsitz, insbesondere für einen Kraftfahrzeugsitz, mit einem dem Sitzteil zugehörigen, festen Beschlagteil und einem gegenüber diesem schwenkbar gelagerten, der Rückenlehne zugehörigen Beschlagteil, wobei am einen Beschlagteil wenigstens ein in radialer Richtung in und außer Sperrlage mit dem anderen Beschlagteil bringbarer Riegel vorgesehen ist, der zusammen mit Übertragungsgliedern eine Lehneneinstellvorrichtung bildet, die mit einem Betätigungshebel in Wirkverbindung steht, und wobei der Lehneneinstellvorrichtung eine Memoryeinrichtung zur Speicherung einer gewünschten einstellbaren Rückenlehnenneigung zugeordnet ist. Ein derartiger Rastbeschlag ist z.B. aus der US-A-5 522 643 Patentschrift bekannt.

Die der Anmelderin eigene DE 199 04 300.0 zeigt beispielsweise einen Rastbeschlag für Fahrzeugsitze, bei welchem der dem Sitzteil zugehörige feste Beschlagteil Führungsansätze aufweist, zwischen denen zwei diametral gegenüberliegende Riegel in radialer Richtung verschoben werden können. Diese Führungsansätze und auch die Riegel sind umgriffen von einem innenverzahnten Ringansatz des mit der Rückenlehne in Verbindung stehenden schwenkbaren Beschlagteiles, wobei die eine Außenverzahnung aufweisenden Riegel in diesen innenverzahnten Ringansatz eingreifen können und in ihrer Eingriffslage die beiden Beschlagteile gegeneinander sperren. Die Riegel weisen Zapfen auf, die in Kulissen einer Mitnehmerscheibe eingreifen, die aufgrund ihrer Kulissenform in der Lage ist, bei entsprechender Verdrehung der Mitnehmerscheibe die Riegel in und außer Eingriff zu bringen. Zur Erzielung und Sicherung der Eingriffslage dient eine federbelastete Nockenscheibe, durch welche die Riegel in ihre Sperrlage überführt und gehalten werden, solange die Nocken der Nockenscheibe die Riegel beaufschlagen. Zur Betätigung dieser Riegel weist sowohl die Nockenscheibe als auch die Mitnehmerscheibe eine profilierte Bohrung auf, in welche ein am Außenumfang profiliertes Übertragungselement schließend eingreift, das seinerseits als Hülse ausgebildet ist und am Innenumfang ebenfalls eine Profilierung aufweist, welche ein Betätigungsglied drehmomentübertragend aufnimmt. Ein derartiger Rastbeschlag lässt sich schnell und in kleinen Stufen verstellen, wenn die Zahnteilung des innenverzahnten Ringansatzes und der außenverzahnten Riegel relativ klein ist. Auch lässt sich ein derartiger Rastbeschlag zum leichteren Einsteigen in den Fond eines PKW schnell nach vorn und auch wieder zurückschwenken. Allerdings ist die zuvor vorhandene Lehnenneigungslage bei einer derartigen Lehneneinstellvorrichtung nicht exakt wieder aufzufinden, so dass der Sitzbenutzer die ihm genehme Neigungslage der Rückenlehne erneut einstellen muss.

Aufgabe der Erfindung ist es, die Lehneneinstellvorrichtung eines solchen Rastbeschlages derart zu verbessern, dass beim Rückschwenken der Rückenlehne aus einer Schwenklage die zuvor eingestellte Lehnenneigungslage wieder aufgefunden werden kann, eine sichere und wohlfeile Bedienung und leichte Montage des Rastbeschlages gegeben ist.

Diese Aufgabe ist erfindungsgemäß dadurch gelöst, dass die Lehneneinstellvorrichtung eine Memoryeinrichtung zur Speicherung einer gewünschten eingestellten Rückenlehnenneigung und eine durch ein separates Bedienelement auslösbare Freischwenkvorrichtung umfasst. Durch das neben dem Betätigungshebel für die Lehneneinstellvorrichtung vorhandene weitere separate Bedienelement lässt sich die Rückenlehne entriegeln und bis in die gewünschte vordere Position vorklappen. In dieser Position verriegelt die Rückenlehne beim Loslassen des separaten Bedienelements oder wird durch eine die Lehne in Verschwenkrichtung belastende starke Feder in dieser Position gehalten. Durch erneutes Betätigen und Festhalten des separaten Bedienelementes bzw. Rückbewegung der Lehne gegen die Kraft der Feder lässt sich entweder die Rückenlehne bis zu einem Anschlag der Memoryeinrichtung zurückklappen oder - bei einem anderen Ausführungsbeispiel - durch erneutes Loslassen dieses separaten Bedienelementes die Lehne wieder in ihrer vorher eingestellten Memorylage verriegeln oder auch bei Festhalten des Bedienelementes darüber hinaus weiter zurückschwenken. Auf jeden Fall ist die gewünschte Stellung der Lehne schnell auffindbar.

Empfehlenswerterweise sind die Memory-Einrichtung und die Freischwenkvorrichtung an einer der Außenseiten der beiden zwischen sich die Lehneneinstellvorrichtung einschließenden Beschlagteile vorgesehen. Durch diese Anordnung ergibt sich eine leichte und übersichtliche Montage und sichere Bedienbarkeit des Rastbeschlages. Günstigerweise sind die Memoryeinrichtung und Freischwenkvorrichtung außerhalb des Kraftübertragungsflusses von dem schwenkbaren Beschlagteil auf den festen Beschlagteil vorgesehen, um auf diese Weise sicherzustellen, dass bei schlagartiger starker Belastung, beispielsweise bei Crashfällen, die volle Last von der Lehneneinstellvorrichtung übernommen wird, während die Memoryeinrichtung und Freischwenkvorrichtung unbelastet bleiben und somit nicht beschädigt werden können. Hierdurch ergibt sich, dass die Freischwenkvorrichtung und die Memoryeinrichtung nicht überdimmesioniert gebaut werden müssen. Bei einem besonderen Ausführungsbeispiel der Erfindung ist die Memoryeinrichtung und die Freischwenkvorrichtung als Einheit an die Außenseite des Beschlagteiles anbaubar, so dass jederzeit auch nachträglich noch eine Ergänzung des Rastbeschlages möglich ist, beispielsweise, wenn der erste Teil des Rastbeschlages bereits fertig montiert ist und dann plötzlich Rastbeschläge verlangt werden, die die erfindungsgemäße Vorrichtung und Einrichtung aufweisen sollen. Durch einen modulartigen Aufbau lässt sich so die Montage leicht und kostengünstig durchführen.

Zum Zwecke der Einstellung der Memoryeinrichtung ist diese aus einer Anschlagscheibe und einer diese festsetzenden Sperrklinke gebildet und es ist die drehgelagerte und im Sperrsinne belastete Sperrklinke durch den auch die Lehneneinstellvorrichtung auslösenden Betätigungshebel entriegelbar, so dass eine leichte Bedienbarkeit gegeben ist. Es empfiehlt sich hierbei, die Anschlagscheibe im Vorschwenksinne der Rückenlehne kraftspeichermäßig zu belasten und die Sperrklinke in Bezug auf den festen Beschlagteil ortsfest drehzulagern und im Sperrsinne federzubelasten, um so eine einfache Auffindbarkeit für die gewünschte Stellung der Memoryeinrichtung zu erzielen.

Bei einem Ausführungsbeispiel der Erfindung ist der Betätigungshebel drehbar an einem Auslöseadapter angeschlossen, der in drehfester Verbindung mit den Übertragungsgliedern der Lehneneinstellvorrichtung steht, wobei am Auslöseadapter ein mit dem Betätigungshebel in Kontakt bringbarer Auslösefinger und ein von einer durch das separate Bedienelement betätigbaren Schwinge beaufschlagbarer Auslösedaumen angeordnet ist.

Bei einem anderen Ausführungsbeispiel der Erfindung ist drehfest am Betätigungshebel ein mit dem Auslöseadapter in Kontakt bringbarer als Auslösefinger dienender Anschlag angeordnet und greift eine durch das separate Bedienelement betätigbare Schwinge mit einem als Auslösedaumen dienender Mitnahmezapfen am Auslöseadapter an. Bei beiden Möglichkeiten kann leicht die gewünschte Neigungsstellung erreicht werden.

Bei beiden Ausführungsbeispielen sind durch den Auslösefinger und den Auslösedaumen durch eine einfache Umkehrung hinsichtlich ihrer Anordnung verschiedene Lösungsmöglichkeiten gegeben.

Durch diesen Auslöseadapter ist sichergestellt, dass bei einer Lösebewegung des Betätigungshebels außer der Lösung der Riegel der Lehneneinstellvorrichtung auch die Sperrklinke von der Anschlagscheibe der Memoryeinrichtung gelöst wird, um sowohl die Lehne in die gewünschte Neigungslage überführen zu können als auch die Anschlagscheibe der Memoryeinrichtung in diese gewünschte Lehnenneigungslage nachzuführen.

Wenn hingegen nur das separate Bedienungselement betätigt wird, ohne dass der Betätigungshebel selbst gelöst wird, so erfolgt keine Lösung der Sperrklinke, so dass die Anschlagscheibe in ihrer eingestellten Lage verbleibt und daher die Rückschwenkbewegung der Rückenlehne wieder bis in die zuvor eingestellte Lehnenneigungslage zurückgeschwenkt werden kann, solange das separate Bedienungselement in seiner Löselage gehalten wird. Damit jedoch der Auslöseadapter durch den Betätigungshebel bewegt werden kann, weist der Betätigungshebel vorteilhaft einen Steueransatz auf, der bei seiner Lösebewegung einen an der Schwinge angelenkten Kulissenhebel im Sinne einer Lösung der mit dem Kulissenhebel wirkverbundenen Sperrklinke bewegt. Diese Wirkverbindung der Sperrklinke lässt sich erzielen, indem die an einer mit dem festen Beschlagteil verbundenen Grundplatte schwenkgelagerte Sperrklinke mit einem Zapfen in eine Kulisse des Kulissenhebels eingreift, der seinerseits eine Steuerkurve aufweist, über welche der Steueransatz des Betätigungshebels bei dessen Lösehub die Sperrklinke auslöst. Um beim Lösen der Sperrklinke zu vermeiden, dass die Anschlagscheibe in eine solche Lage gerät, dass sie außerhalb der Eingriffsmöglichkeit der Sperrklinke liegt, weist die Grundplatte einen Haltevorsprung zur Begrenzung der im Vorschwenksinne erfolgenden Bewegung der Anschlagscheibe infolge ihrer Federbelastung auf.

Eine geschützte Anordnung von Sperrklinke und Anschlagscheibe wird vorteilhaft dadurch erzielt, dass die an der Grundplatte gelagerte Sperrklinke die von dieser in Sperrlage gehaltene Anschlagscheibe und der die Anschlagscheibe unter Federbelastung haltende, als Ringfeder gestaltete Kraftspeicher in einem zwischen der Grundplatte und einer Deckplatte gebildeten Hohlraum angeordnet sind, wobei die Deckplatte mit dem der Rückenlehne zugehörigen, schwenkbaren Beschlagteil verbunden ist. Dabei weist die Deckplatte vorteilhaft einen in den Schwenkweg der Anschlagscheibe vorragenden Anschlag zur Drehmitnahme der Anschlagscheibe gegen deren Kraftspeicherbelastung beim Rückschwenken der Rückenlehne in die gewünschte Neigungslage zwecks Memory-Einstellung auf. Eine vorteilhafte Ausbildung der Memoryeinrichtung wird ermöglicht, indem die Anschlagscheibe ein außenverzahntes Sperrsegment aufweist, dessen radial nach innen rückspringende Endflächen Anlageabsätze für den Haltevorsprung der Grundplatte einerseits und den Anschlag der Deckplatte andererseits bilden.

Bei einem besonderen Ausführungsbeispiel der Erfindung ist bei Bewegung sowohl des Betätigungshebel als auch des Bedienelementes die Lehneneinstellvorrichtung entriegelbar. Durch diese Maßnahme ist sichergestellt, dass bei einer Freischwenkbewegung oder bei der Lehneneinstellung beide Rastbeschläge des Sitzes bewegbar sind, so dass eine Einstellung der Lehne leicht erfolgen kann, ohne dass auch der zweite Rastbeschlag einen Betätigungshebel für die Lehneneinstellung oder ein Bedienelement für die Freischwenkung bedarf. Vorteilhafterweise ist die Memoryeinrichtung durch eine Sperrscheibe und eine Kulissenscheibe gebildet, die die Sperrklinke steuert, hierbei ist die Sperrscheibe mit dem schwenkbarem Beschlagteil bewegbar. Durch diese Maßnahme ergibt sich eine einfache Konstruktion sowie Montage der erfindungsgemäßen Memoryeinrichtung, insbesondere kann ohne großen Aufwand die Memoryeinrichtung gestaltet und gesteuert werden.

Empfehlenswerterweise ist die Schwenkbewegung der Sperrklinke über eine drehbare Kulissenscheibe steuerbar, hierbei greift ein entfernt von der Lagerstelle der Sperrklinke angeordneter Zapfen in eine an der Kulissenscheibe angeordnete Kulissenführung, so dass bei Drehung der Kulissenscheibe eine Schwenkbewegung der Sperrklinke leicht durchzuführen ist, insbesondere kann die Sperrklinke einfach gegen die Sperrscheibe und deren Verzahnung geführt werden. Vorteilhafterweise sind die Kulissenscheibe und eine die Schwenklagerstelle für die Sperrklinke aufweisende Steuerscheibe durch eine Feder in ihrer Drehbewegung gegenseitig gespannt gehalten, wodurch eine automatische Rückführung der Sperrklinke gegen die Sperrscheibe möglich ist, da die beiden Scheiben unter den Einfluss der Feder gegeneinander rückdrehbar sind.

Günstig ist es, wenn der Betätigungshebel drehfest ein Zwischenglied trägt, das mit einem Vorsprung in eine bogenförmige Ausnehmung einer Verlängerung des Auslöseadapters zu dessen Mitdrehung eingreift und dass das Zwischenglied einen Anschlag aufweist, der einen Mitnahmehebel bewegt, der selber die Kulissenscheibe bei Betätigung des Betätigungshebels verdreht. Durch die Mitnahme des Auslöseadapters wird - bei beiden Rastbeschläge eines Sitzes - die Lehneneinstellung freigegeben, wobei durch Drehung der Kulissenscheibe dann eine neue Einstellung der Lehnenneigung gegeben ist.

Bei einem besonderen Ausführungsbeispiel der Erfindung geben Sperrmittel von einer Ausgangsstelle aus, wahlweise nur eine der Betätigungsbewegungen für die Memoryeinrichtung oder die Freischwenkeinrichtung frei. Die zuerst betätigte Einrichtung hat Vorrang. Diese Sperrmittel gestatten, dass nicht unbewusst beide Hebel zugleich bedient werden können, wodurch ggf. für einen Benutzer hinsichtlich der Neigung der Rückenlehne Beeinträchtigungen erfolgen können.

Besonders günstig ist es, wenn der eine der drei Stellungen - zwei Sperrstellungen oder eine Ausgangstellung - einnehmende schwenkbare Mitnahmehebel in den jeweiligen Sperrstellungen eine der Einstellbewegungen von Freischwenkeinrichtung oder Memoryeinrichtung sperrt, während in der Ausgangsstellung wahlweise entweder Freischwenkvorrichtung oder Memoryeinrichtung betätigbar ist. Durch die Wahl eines einfachen Mitnahmehebels lässt sich eine wahlweise Einstellung der Bewegungen der Einrichtungen durchführen, ohne zu befürchten, dass Bedienschwierigkeiten auftreten.

Empfehlenswert ist es hierbei, wenn der Mitnahmehebel schwenkbar an einem dem festen Beschlagteil zugeordneten Haltezapfen gelagert ist, um so eine genaue Steuerung und Bewegung des Mitnahmehebels vornehmen zu können. Bei einem besonderen Ausführungsbeispiel ist hierbei der Mitnahmehebel als ein zwei Schenkel aufweisender Winkelhebel ausgebildet, der mit seinem einen Schenkel die Bewegung der Freischwenkvorrichtung und mit dem anderen Schenkel die Bewegung zur Betätigung der Memoryeinrichtung sperrt. Durch die Ausbildung des Winkelhebels verkleinert sich der Aufwand des Rastbeschlages, da hierdurch eine einfache Drehung eines Hebels und eine sichere Bedienung gegeben ist, die sehr benutzerfreundlich ist.

Bei einem besonderen Ausführungsbeispiel der Erfindung sind zur Steuerung der Freischwenkeinrichtung und der Memoryeinrichtung auf der Drehachse der Lehne axial nebeneinander drei drehbare Scheiben vorgesehen, eine Steuerscheibe, die Sperrscheibe und die Kulissenscheibe. Die drehfest mit dem schwenkbaren Beschlagteil verbundene Sperrscheibe ist an ihrem Umfang mit einer Verzahnung vorgesehen, in die eine an einer schwenkbaren Sperrklinke angeordneten Zahnklaue eingreift. Die Steuerscheibe einerseits trägt einen Lagerzapfen für die Sperrklinke und weist andererseits einen zahnartigen Ausschnitt auf, in die ein Zahn einer um einen den festen Beschlagteil zugeordneten Haltezapfen schwenkbaren Blockierklinke eingreift. Die Kulissenscheibe ist mit einer Kulissenführung ausgestattet, in die ein Zapfen der Sperrklinke eingreift, wobei Kulissenscheibe und Steuerscheibe gegeneinander unter Federspannung verdrehbar sind. Bei dieser Ausführungsform liegen die wesentlichen Teile von der Memoryeinrichtung sowie der Freischwenkeinrichtung und sogar der Lehneneinstelleinrichtung auf einer Achse nebeneinander, so dass eine genaue Funktionsweise und sichere Bedienung gegeben ist, vor allem auch eine leichte nachträgliche Montage. Die genannten Teile können modulartig aufgebaut werden, um so die Einrichtung leicht anbauen zu können. Der Benutzer findet nach jeder Verschwenkung der Lehne seine ihm günstigste Lehnenneigung. Von Vorteil trägt die Kulissenscheibe eine Erhöhung, gegen die ein Anschlag des Mitnahmehebels zur Anlage kommt, um bei einer Schwenkung des Mitnahmehebels die Kulissenscheibe gegenüber der Steuerscheibe unter Federspannung zu verdrehen. Diese Anordnung verbessert die Einstellbarkeit der Memoryeinrichtung, insbesondere hinsichtlich ihres Aufbaus.

Von Vorteil ist es, wenn bei der Freischwenkbewegung bei Freigabe des Bedienelementes der Zahn des Blockierhebels federnd auf der Umfangsfläche der Steuerscheibe ruht, da so einfach die Schwenkung durchgeführt werden muss, ohne das Bedienelement noch zu betätigen. Bei einer Rückschwenkung greift der Zahn des Blockierhebels automatisch in die Zahnausnehmung der Steuerscheibe ein, was für den Benutzer eine einfache Handhabung darstellt. Bei Eingriff des Zahnes hat er zugleich seine gewünschte Neigungseinstellung der Lehne.

Falls eine nach der anderen Seite gewünschte Schwenkung der Lehne gewünscht wird, kann durch Halten des Bedienelementes oder erneutes Betätigen des Bedienelementes verhindert werden, dass der Zahn in die Ausnehmung eingreift. Darüber hinaus erlaubt die federnde Belastung des Zahns einen sicheren automatischen Eingriff in die zahnartige Ausnehmung, wenn es gewünscht wird.

Empfehlenswert ist es, wenn die Blockierklinke einen Festlegezapfen aufweist, an dem eine von dem Auslösehebel betätigbare Koppel gelenkig zur Freigabe der Freischwenkbewegung angeordnet ist, hierbei dient der Festlegezapfen auch als Anschlag für den zweiten Schenkel des Winkelhebels zur Sperrung der Bewegung der Blockierklinke bei eingeleiteter Einstellbewegung der Lehne. Wiederum ist eine sichere Bedienung der Freischwenkeinrichtung und der Lehneneinstelleinrichtung gegeben.

Günstigerweise sind die schwenkbare Blockierklinke und der Mitnahmehebel durch die Kraft einer Feder aneinanderliegend gehalten, um so eine definierte Lage für den Mitnahmehebel in seiner Ausgangsstellung zu erhalten.

Von Vorteil ist es weiterhin, wenn der Mitnahmehebel eine Führungsfläche aufweist, gegen die der Anschlag des Betätigungshebels bei seiner Bewegung angreift, um so die Bewegung für die Lehneneinstellung einleiten zu können.

Empfehlenswerterweise verschwenkt bei Bewegung des Betätigungshebels ein Anschlag des Betätigungsgliedes den Mitnahmehebel zur Drehung der Kulissenscheibe zur Neigungsverstellung. Zugleich bewegt der Vorsprung des Zwischenhebels den Betätigungshebels und des Auslöseadapters, um so die Freigabe der Lehneneinstellung zu erreichen.

Bei einem besonderen Ausführungsbeispiel der Erfindung ist bei der Freischwenkbewegung bei Belastung des Bedienelementes über die gewählte Memoryeinstellung hinaus die Lehne des Kraftfahrzeugsitzes über den gesamten Schwenkbereich bewegbar. Auf diese Weise kann, falls die gewünschte Neigungsstellung noch nicht aufgerufen werden soll, die Lehne von vorne ganz nach hinten oder von hinten nach der Vorderseite hin geschwenkt werden. Erst bei einer Freigabe des Bedienelementes wird die gewünschte Neigungsstellung eingestellt.

Die Erfindung ist in einem Ausführungsbeispiel auf der Zeichnung dargestellt und wird nachfolgend näher erläutert. Es zeigen:
- Fig. 1: den Rastbeschlag in einer Ansicht in Richtung auf seine Außenseite,
- Fig. 2: den aus Fig. 1 ersichtlichen Rastbeschlag in einem Längsschnitt nach der Linie II - II von Fig. 1,
- Fig. 2A: den Rastbeschlag in einem Querschnitt gemäß der Linie IIA -IIA von Fig. 2,
- Fig. 3A: die Außenseite des Rastbeschlages, wobei sich der der Rückenlehne zugehörige Beschlagteil in einer zum Einsitzen geeigneten Neigungslage vor Auslösung des Betätigungshebels befindet,
- Fig. 3B: der aus Fig. 3A ersichtliche Rastbeschlag bei abgenommener Deckplatte und entferntem Betätigungshebel mit Auslöseadapter, Kulissenhebel und Schwinge, bei dem sich die Anschlagscheibe in festgestellter Memoryposition befindet,
- Fig. 4A: der aus Fig. 3A ersichtliche Rastbeschlag, bei dem jedoch der Betätigungshebel für den Beginn der Vorschwenkbewegung in Löselage geschwenkt ist,
- Fig. 4B: den aus Fig. 4A ersichtlichen Rastbeschlag, bei dem wiederum die Deckplatte, der Betätigungshebel mit dem Auslöseadapter, Kulissenhebel und Schwinge entfernt ist, und infolge gedrücktem Kulissenhebel die Anschlagscheibe entsperrt ist,
- Fig. 5A: der aus Fig. 4A ersichtliche Rastbeschlag in einer gegenüber Fig. 4A leicht vorgeschwenkten Lage in erneuter Verriegelungsposition,
- Fig. 5B: den aus Fig. 5A ersichtlichen Rastbeschlag bei abgenommener Deckplatte und wiederum entferntem Betätigungshebel und Auslöseadapter, wobei in der aus Fig. 5A ersichtlichen Neigungslage die Anschlagscheibe infolge Federkraft an den Anschlag der Grundplatte verschwenkt ist,
- Fig. 6A: den wiederum in einer zum Einsitzen geeigneten Neigungslage befindlichen Rastbeschlag vor Betätigung des separaten Bedienelementes zur Drehmitnahme des Auslöseadapters zur Freigabe der Vorschwenkbewegung bei gesperrter Anschlagscheibe der Memoryeinrichtung,
- Fig. 6B: den aus Fig. 6A ersichtlichen Gelenkbeschlag bei wiederum abgenommener Deckplatte und entferntem Betätigungshebel und Auslöseadapter, wobei die Anschlagscheibe in ihrer eingestellten Memorylage gesperrt ist,
- Fig. 7: den aus Fig. 6A ersichtlichen Rastbeschlag in frei vorgeschwenkter Lage des mit der Rückenlehne verbundenen Beschlagteiles,
- Fig. 8: den in frei vorgeschwenkter Lage befindlichen Rastbeschlag gemäß Fig. 7 bei abgenommener Deckplatte, entferntem Betätigungshebel, Auslöseadapter, Kulissenhebel und Schwinge bei der die Anschlagscheibe in Memoryposition gesperrt ist,
- Fig. 9: den aus Fig. 8 ersichtlichen Rastbeschlag, bei dem der der Rückenlehne zugehörige Beschlagteil die sitzgerechte Lehnenneigungslage nicht erreicht hat und in der dargestellten Lage infolge Loslassen des separaten Bedienelementes in dieser Lage gesperrt ist.
- Fig. 10: ein weiteres Ausführungsbeispiel des Rastbeschlages im Schnitt,
- Fig. 11: eine Seitenansicht des Rastbeschlages,
- Fig. 12: eine perspektivische Darstellung des Rastbeschlages,
- Fig. 13: bei einem weiteren Ausführungsbeispiel des Rastbeschlages eine Ausgangsstellung von Betätigungshebel und Bedienelement,
- Fig. 14: den Rastbeschlag in einer Freischwenkstellung,
- Fig. 15: den Rastbeschlag in einer Lehneneinstellung,
- Fig. 16: in größerem Maßstabe ein Ausschnitt einer Blockierklinke,
- Fig. 17: in größerem Maßstabe eine andere Stellung der Blockierklinke.

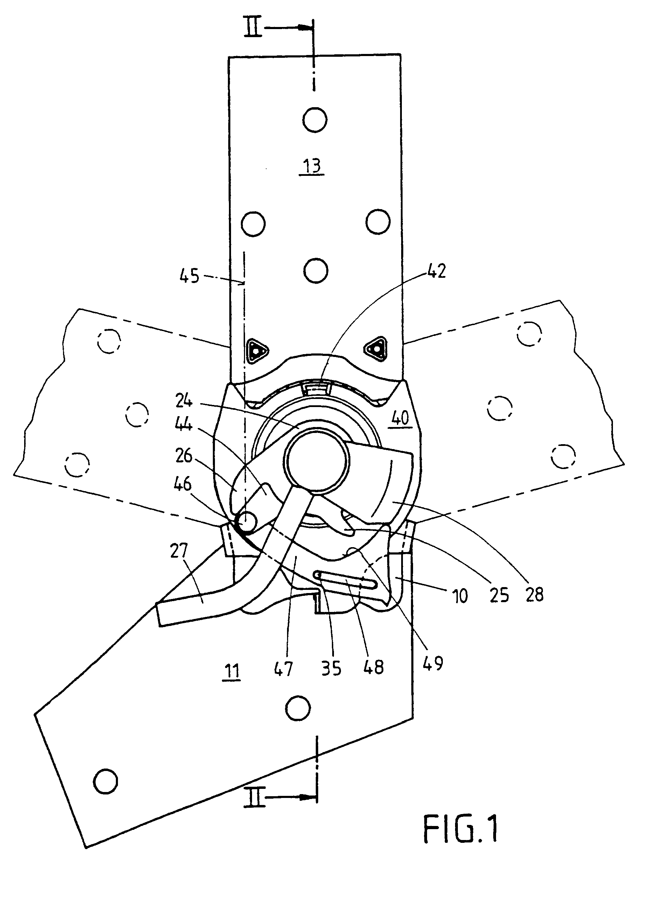

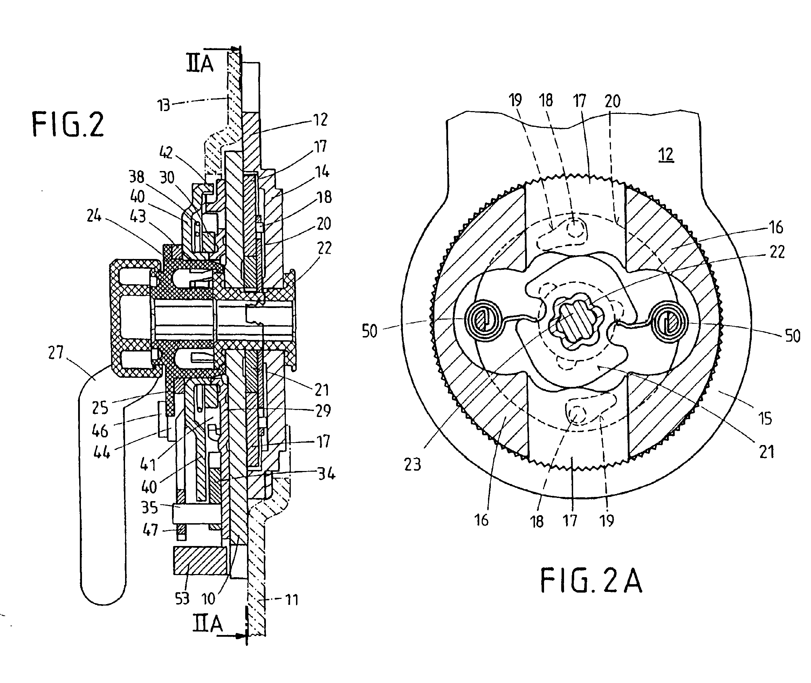

Wie am besten aus den Fig. 1 und 2 entnommen werden kann, ist der feste Beschlagteil 10 mit einer Befestigungslasche 11 verbunden, die ihrerseits an den nicht dargestellten Sitzteilrahmen des Fahrzeugsitzes angeschlossen werden kann. An diesem festen Beschlagteil 10 stützt sich ein der Rückenlehne zugehöriger schwenkbarer Beschlagteil 12 ab, der seinerseits ebenfalls über eine mit dem Beschlagteil 12 verbundene Anschlusslasche 13 an der ebenfalls nicht dargestellten Rückenlehne des Fahrzeugsitzes befestigt ist.

Der schwenkbare Beschlagteil 12 weist einen durch Ausdrücken einer Stützscheibe 14 erzeugten innenverzahnten Ringansatz 15 auf, der sich auf dem zu einem Kreis ergänzten Umfang von Führungsansätzen 16 des festen Beschlagteiles 10 abstützt. Diese Führungsansätze 16 sind bei dem am besten aus den Fig. 2 und 2A ersichtlichen Ausführungsbeispiel durch jeweils eine diametral gegenüberliegende Ausnehmung unterbrochen, in denen zwei außenverzahnte Riegel 17 geführt sind, wobei aus einer Breitseite jeden Riegels 17 ein Steuerzapfen 18 austritt, und jeder Steuerzapfen 18 von einem Steuerschlitz 19 einer Mitnehmerscheibe 20 umfasst ist. Die radial nach innen weisenden Flächen der Riegel 17 werden von einer federbelasteten Nockenscheibe 21 in Sperrlage gedrückt, sofern die Nockenscheibe nicht gegen die Wirkung der diese in Sperrrichtung beaufschlagenden Federglieder 50 zurückgeschwenkt ist. Sowohl die Mitnehmerscheibe 20 als auch die Nockenscheibe 21 werden mit den Beschlagteilen 10 und 12 durch eine in Längsrichtung zweigeteilte Kragenbuchse 22 in axialer Richtung zusammengehalten, die im Bereich von Mitnehmerscheibe 20 und Nockenscheibe 21 außenseitig ein Mitnehmerprofil aufweist, auf welches die Mitnehmerscheibe 20 und die Nockenscheibe 21 formschlüssig passen. Diese Kragenbuchse 22 ist auch an ihrem Innenumfang profiliert und dient der Aufnahme einer Übertragungsstange 23 (Fig. 2A), die im Bedarfsfall den auf der einen Sitzlängsseite angeordneten Rastbeschlag mit dem auf der anderen Sitzlängsseite angeordneten Beschlag verbindet. Die Riegel 17 bilden in Verbindung mit der Mitnehmerscheibe 20 und der Nockenscheibe 21 die primären Bauteile einer Lehneneinstellvorrichtung.

An den die Außenseite des Rastbeschlages im zentralen Bereich übergreifenden Kragen der Kragenbuchse 22 schließt sich ein an dieser drehbar gelagerter, buchsenförmiger Auslöseadapter 24 an, dessen innerer Nabenumfang in gleicher Weise profiliert ist, wie die Kragenbuchse 22. Dieser Auslöseadapter weist einerseits einen in radialer Richtung abragenden Auslösefinger 25 und einen dazu in Umfangsrichtung beabstandeten und ebenfalls radial ausragenden Auslösedaumen 26 auf, deren Funktionsweise weiter unten beschrieben ist. An einem ringartigen Rastvorsprung an der Außenseite des Auslöseadapters 24 ist ein Betätigungshebel 27 lose drehbar gelagert, der einen in die Ebene des Auslösefingers 25 abgekröpften Steueransatz 28 aufweist (Fig. 1 und 2). Die Kragenbuchse 22, die Übertragungsstange 23 und der Auslöseadapter 24 bilden Sekundärbauteile sowohl der Lehneneinstellvorrichtung als auch der Freischwenkvorrichtung.

An dem festen Beschlagteil 10 ist an dessen Außenseite eine Grundplatte 29 befestigt, an welcher konzentrisch zur Kragenbuchse 22 eine Anschlagscheibe 30 gelagert ist, die ein außenverzahntes Sperrsegment 31 aufweist, dessen beiderseits radial nach innen rückspringende Endflächen in einen Ringbereich der Anschlagscheibe übergehen, mit dem die Anschlagscheibe 30 an der Grundplatte 29 drehbar abgestützt ist. Ein im unteren Bereich aus der Grundplatte vorragender Lagerzapfen 33 dient der schwenkbaren Aufnahme einer Sperrklinke 34. Diese Sperrklinke 34 weist einerseits einen abragenden Zapfen 35 zu ihrer Betätigung auf und ist andererseits mit einer Zahnklaue 36 versehen, welche in die Verzahnung des Sperrsegmentes 31 eingreifen kann und in der Eingriffslage durch eine an der Grundplatte 29 festgelegte Blattfeder 37 gehalten ist. Die Anschlagscheibe 30 ist durch einen Kraftspeicher im Vorschwenksinne belastet, der aus einer an der Grundplatte 29 einerseits gehalterten Ringfeder 38 gebildet ist, die andererseits an der Anschlagscheibe 30 angreift. Die Grundplatte 29 weist außerdem in ihrem oberen Bereich einen gegenüber dem Beschlagteil 10 abragenden Haltevorsprung 39 auf, der in den Schwenkweg des Sperrsegmentes 31 der Anschlagscheibe 30 einragt und deren Schwenkweg nach vorn begrenzt. Die Anschlagscheibe 30, die Sperrklinke 34 mit der diese beaufschlagenden Blattfeder 37 und die Ringfeder 38 bilden die primären Bauteile der Memoryeinrichtung, die von einer am der Rückenlehne zugehörigen, schwenkbaren Beschlagteil 12 festgelegten Deckplatte 40 übergriffen sind, wobei zwischen Grundplatte 29 und Deckplatte 40 ein Hohlraum 41 gebildet ist, in welchem die primären Bauteile der Memoryeinrichtung untergebracht sind. Die mit dem schwenkbaren Beschlagteil verbundene Deckplatte 40 weist ihrerseits in ihrem der Anschlusslasche 13 für die Rückenlehne zugekehrten oberen Scheitelpunktbereich einen Anschlag 42 auf, der durch eine einwärts gebogene Abwinklung der Deckplatte 40 gebildet ist, und in den Schwenkweg des Sperrsegmentes 31 der Anschlagscheibe 30 über dem Haltevorsprung 39 ebenfalls einragt. Die Deckplatte 40 weist in ihrem Zentrum einen Krageneinzug auf, der den Außenmantel des Auslöseadapters 24 stützt.

Am Auslöseadapter 24 ist außerdem zwischen der Ebene von Auslösefinger 25 und Auslösedaumen 26 einerseits und der Deckplatte 40 andererseits eine Schwinge 43 frei drehbar gelagert, die als ringförmige Scheibe mit einem radial abragenden und in die Ebene des Auslösedaumens 26 verkröpften Mitnehmerfinger 44 gestaltet ist. Dieser Mitnehmerfinger 44 ist an seinem freien Ende als Anlenkstelle für ein separates Bedienelement 45 ausgebildet, wobei dieses Bedienelement vorzugsweise aus einem Zugglied (strichpunktiert angedeutet) besteht, das zwecks komfortabler Handhabung zu einem am oberen Ende der Rückenlehne angeordneten, jedoch nicht dargestellten Lösehebel geführt ist. An der das Bedienelement 45 aufnehmenden Stelle des Mitnehmerfingers 44 der Schwinge 43 ist mittels eines Verbindungsniets 46 ein Kulissenhebel 47 drehgelenkig verbunden, der seinerseits mit einer langlochartigen Kulisse 48 den Zapfen 35 der Sperrklinke 34 aufnimmt. Oberhalb der Kulisse 48 befindet sich am freien Ende des Kulissenhebels 47 eine Steuerkurve 49, die zur Lehnenneigungseinstellung und zur Einstellung der Anschlagscheibe für die Memoryfunktion von der Unterseite des Steueransatzes 28 am Betätigungshebel 27 kontaktiert werden kann. Neben dem Bedienelement 45 bilden die Schwinge 43 und der Kulissenhebel 47 die primären Bauteile der Freischwenkvorrichtung.

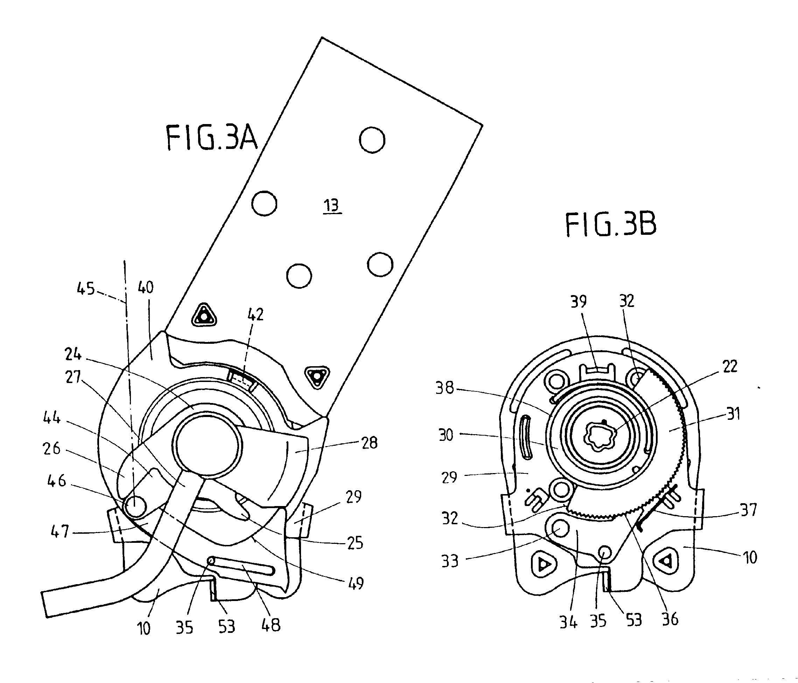

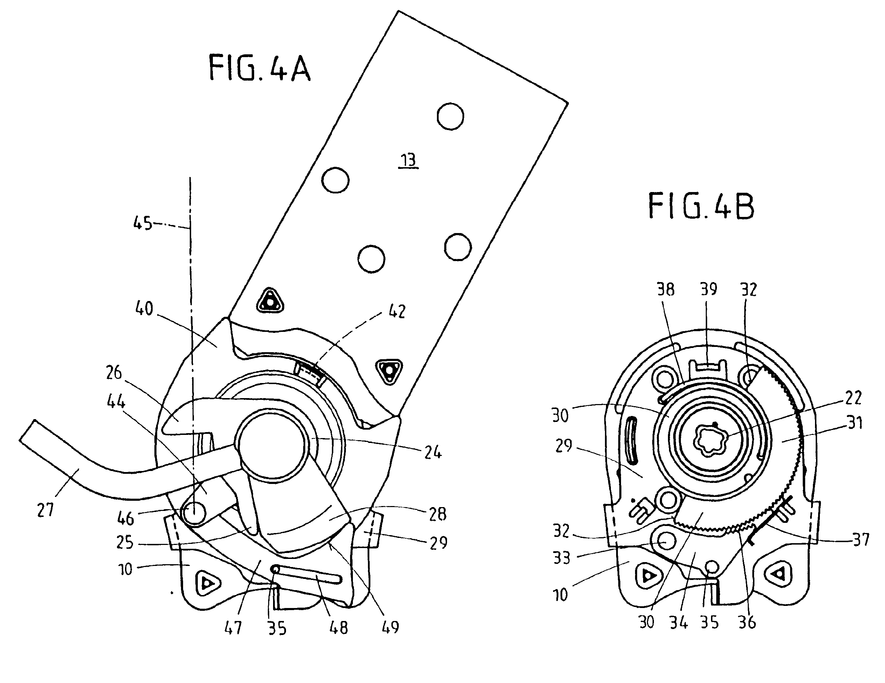

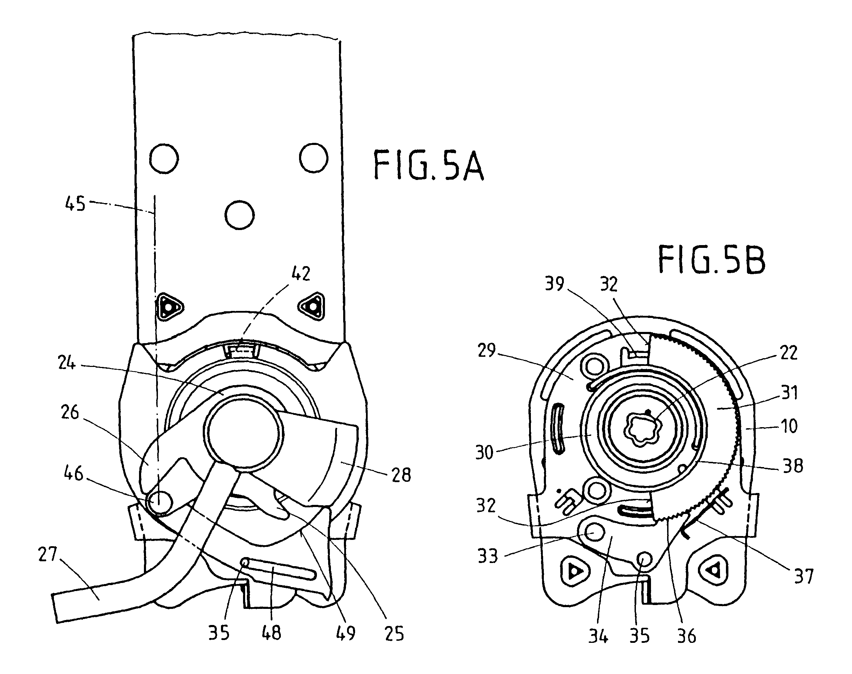

Aus der in Fig. 1 dargestellten "Sechs-Uhr-Stellung" lässt sich der schwenkbare Beschlagteil 12 mit der daran befestigten Anschlusslasche 13 und somit auch der damit verbundenen, nicht dargestellten Rückenlehne um etwa 75° sowohl nach vorn als auch nach hinten verschwenken, wie dies in strichpunktierten Linien der Anschlusslasche 13 dargestellt ist. Wenn nun die Rückenlehne sich in einer Neigungslage befindet, wie dies beispielsweise aus der Fig. 3A ersichtlich ist, befindet sich die Memoryeinrichtung mit ihrer Anschlagscheibe 30 und ihrer Sperrklinke 34 in der aus Fig. 3B ersichtlichen Stellung, bei welcher der Anschlag 42 der Deckplatte 40 an der oberen Endfläche 32 des Sperrsegmentes 31 der Anschlagscheibe 30 anliegt. Wenn nun eine andere Neigungslage der Rückenlehne eingestellt werden soll, so ist der Betätigungshebel 27 zunächst in die aus Fig. 4A ersichtliche Lage zu verschwenken. Dabei drückt einerseits der Steueransatz 28 des Betätigungshebels 27 über die Steuerkurve 49 den Kulissenhebel 47 nach unten, wodurch auch der in der Kulisse 48 befindliche Zapfen 35 der Sperrklinke 34 nach unten gedrückt wird, so dass die Zahnklaue 36 der Sperrklinke 34 aus der Verzahnung des Sperrsegmentes 31 ausgesteuert wird, wie dies aus Fig. 4B ersichtlich ist. Wird dann bei beibehaltener Auslösung des Betätigungshebels 27 die Rückenlehne vom Sitzbenutzer in der einen oder anderen Drehrichtung bewegt, so folgt dieser Bewegung das Sperrsegment 31 der Anschlagscheibe 30, weil die obere Endfläche 32 am Anschlag 42 der mit dem Beschlagteil 12 verschwenkenden Deckplatte 40 verbleibt. Eine Verschwenkung des mit der Rückenlehne verbundenen Beschlagteiles 12 ist deshalb möglich, weil der Steueransatz 28 auch am Auslösefinger 25 des Auslöseadapters zur Anlage gekommen ist und über den mitverschwenkten Auslöseadapter 24 über die Übertragungsstange 23 auch die Kragenbuchse 22 mitverdreht wurde, die ihrerseits die Nockenscheibe 21 entgegen ihrer in Fig. 2A ersichtlichen Lage in eine Wirkungslosstellung gedreht ist, wobei gleichzeitig auch die Mitnehmerscheibe 20 verdreht wurde, so dass über die Steuerschlitze 19 und die Steuerzapfen 18 die Riegel 17 aus der Innenverzahnung des Ringansatzes 15 des mit der Rückenlehne verbundenen Beschlagteiles 12 gezogen worden sind. Sobald nun der Betätigungshebel 27 losgelassen wird, sorgen die die Nockenscheibe 21 beaufschlagenden Federglieder 50 für einen gegenüber dem vorbeschriebenen Bewegungsablauf rückläufigen Bewegungsablauf, so dass nach einer Verschwenkung der Rückenlehne in beispielsweise die aus Fig. 5A ersichtliche Lage eine Sperrung dieser Lage erfolgt. Dabei nimmt dann die Anschlagscheibe 30 mit ihrem Sperrsegment 31 die aus Fig. 5B ersichtliche Stellung ein. Über diese Stellung hinaus lässt sich die Anschlagscheibe 30 zur Auffindung einer Memoryposition nicht weiter nach vorn verschwenken, weil sie in dieser Lage mit ihrer oberen Endfläche 32 am Haltevorsprung 39 der Grundplatte 29 zur Anlage gekommen ist.

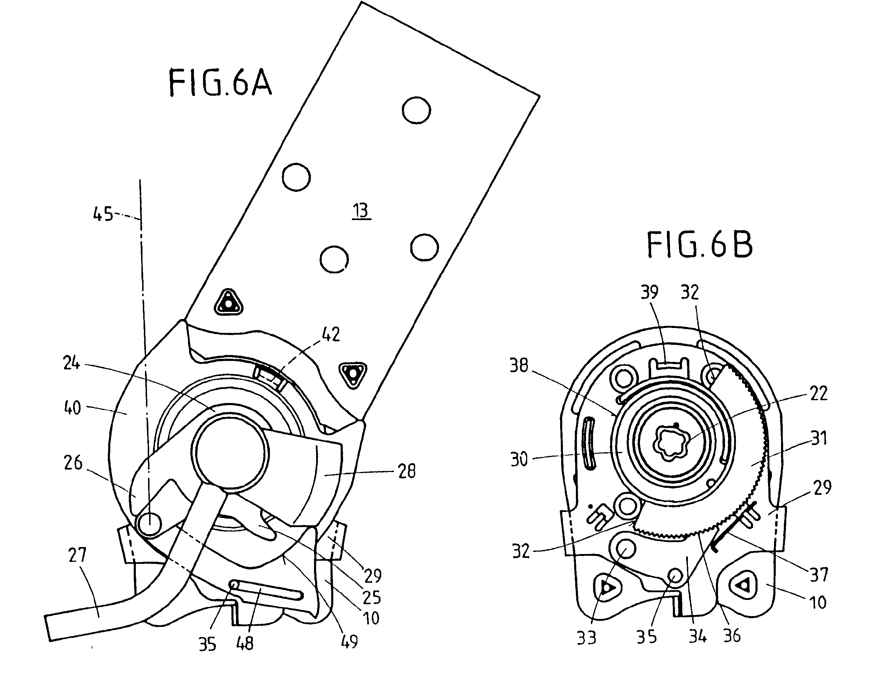

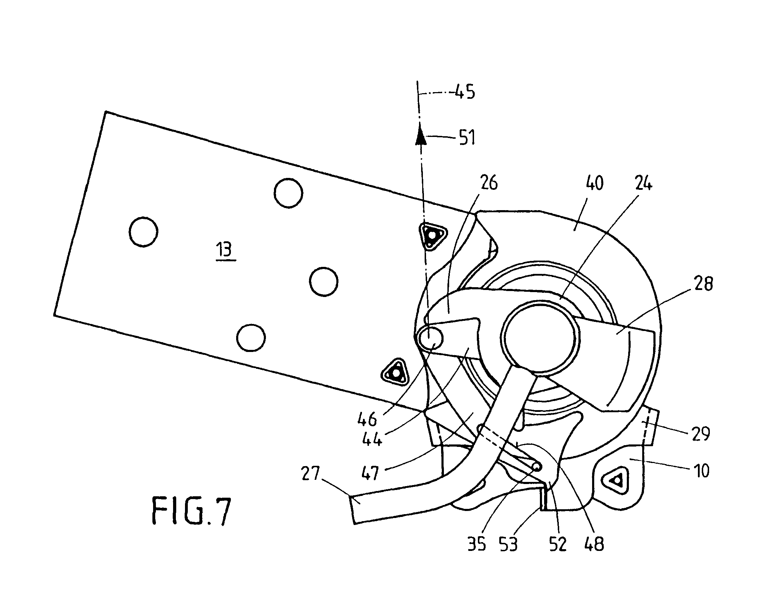

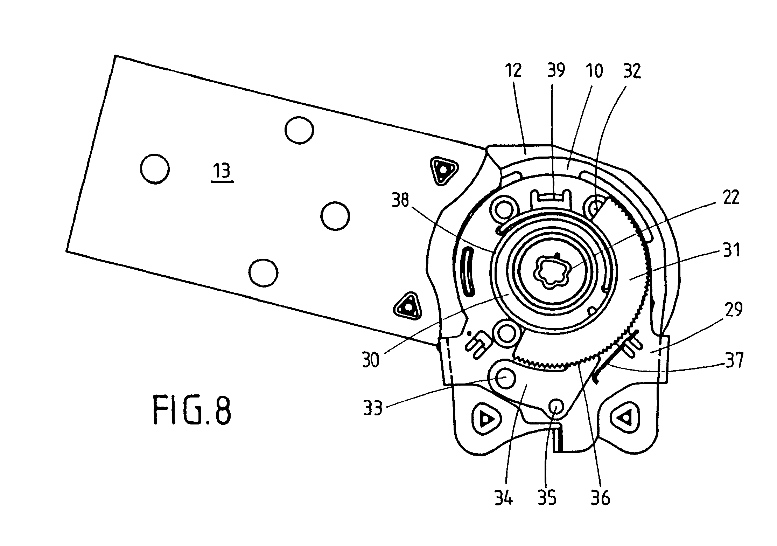

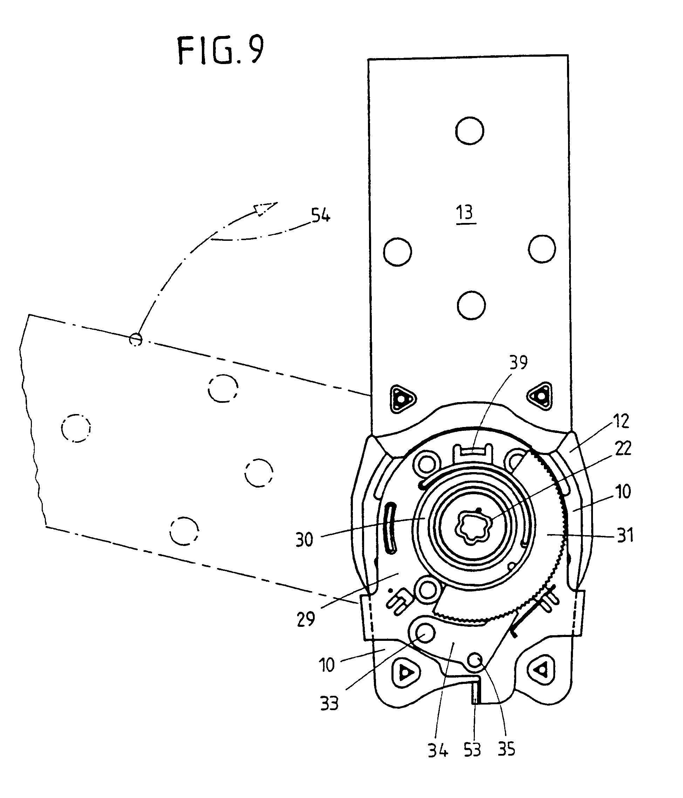

Unabhängig davon, lässt sich allerdings die Rückenlehne nach vorn frei schwenken, was anhand der Fig. 6A bis 8 nachfolgend beschrieben wird. Ausgehend von der in Fig. 6A dargestellten Neigungslage der Anschlusslasche 13 und somit auch der nicht dargestellten Rückenlehne befindet sich das gesamte System in verrasteter Lage. Die eine Memoryfunktion bewirkende Anschlagscheibe 30 ist dabei infolge vorheriger Bewegung des Anschlages 42 an der mit dem schwenkbaren Beschlagteil 12 verbundenen Deckplatte 40 in die aus Fig. 6B ersichtliche Position zur Memoryfunktion verstellt und in dieser Stellage arretiert worden. Wenn nun in dieser Lage am Bedienelement 45 eine Zugkraft in Richtung des aus Fig. 7 ersichtlichen Pfeiles 51 erfolgt, so nimmt der Mitnehmerfinger 44 der Schwinge 43 den Auslösedaumen 26 des Auslöseadapters 24 in eine beispielsweise aus Fig. 7 ersichtliche Lage mit, ohne dass der Betätigungshebel 27 bewegt wird. Während dieser Schwenkbewegung des Auslöseadapters 24 werden in der oben geschilderten Weise auch die Riegel 17 aus der Verzahnung des Ringansatzes 15 des schwenkbaren Beschlagteiles 12 ausgezogen, so dass der schwenkbare Beschlagteil 12 freikommt und in die aus Fig. 7 ersichtliche Lage vorgeschwenkt werden kann. Dabei verändert sich die Einstellage der Anschlagscheibe 30 nicht und verbleibt in der aus den Fig. 6B und 8 ersichtlichen Stellung. Dies deshalb, weil die Kulisse 48 des Kulissenhebels 47 über den Zapfen 35 der Sperrklinke 34 gleitet. Der Kulissenhebel 47 stellt bei Betätigung der Schwinge 43 über das Bedienelement 45 einen Formschluss her, der ein Lösen der Sperrklinke 34 beim Belasten des Anschlagwinkels 53 verhindert, so dass keine Beeinflussung der Sperrklinke 34 erfolgt. Dabei wird auch der Lösehub des zur Schwinge 43 gehörenden Mitnehmerfingers 44 durch die Sperrnase 52 des Kulissenhebels 47 begrenzt. Wenn nun bei der im Sinne des Pfeiles 51 in Fig. 7 beibehaltenen, gezogenen Lage des Bedienelementes 45 eine Rückschwenkung erfolgt, so kann diese Bewegung so weit durchgeführt werden, bis die Anschlusslasche 13 und damit auch die Rückenlehne wieder die aus Fig. 6A ersichtliche Lage einnimmt. Wird jedoch zuvor, wie beispielsweise in Fig. 9 dargestellt, die im Sinne des Pfeiles 54 aus der in Fig. 9 in strichpunktierten Linien dargestellten Vorschwenklage befindliche Anschlusslasche 13 zurückgeschwenkt bis die aus Fig. 9 in ausgezogenen Linien dargestellte Lage erreicht ist (beispielsweise durch Blockierung der Rückenlehne infolge eines sperrigen Gegenstandes im Fahrzeugfond) und dann die Betätigung des Bedienelementes unterbrochen wird, so erfolgt sofort wieder die aus Fig. 2A ersichtliche Sperrung. Somit ist die Rückenlehne nach Loslassen des Bedienelements 45 und damit der Schwinge 43 immer verriegelt. Es kann nun durch erneute Betätigung des Bedienelementes 45 die durch die Memoryfunktion bewahrte und in Fig. 6A dargestellte Anschlaglage wieder erreicht werden, wenn zuvor die Blockierung der Rückenlehne beseitigt wird. Denn über die Auslösung des Bedienelementes 45 wird die Memoryfunktion der Anschlagscheibe 30 nicht verändert. Falls jedoch eine andere Neigungslage der Rückenlehne eingestellt werden soll, so ist der Betätigungshebel 27 in die aus Fig. 4A ersichtliche Lage zu bringen, wodurch einerseits der schwenkbare Beschlagteil 12 über die Riegel 17 entsperrt wird und andererseits die Sperrklinke 34 gelöst wird, so dass die federbelastete Anschlagscheibe 30 am Anschlag 42 der mit dem schwenkbaren Beschlagteil 12 fest verbundenen Deckplatte 40 zur Anlage kommt und der Bewegung dieses Anschlages 42 bei einer Verschwenkung nach hinten über den gesamten Schwenkbereich folgt und einer Verschwenkung nach vorn nur bis zum Haltevorsprung 39 der Grundplatte 29 folgt, um dort zur Anlage zu gelangen.

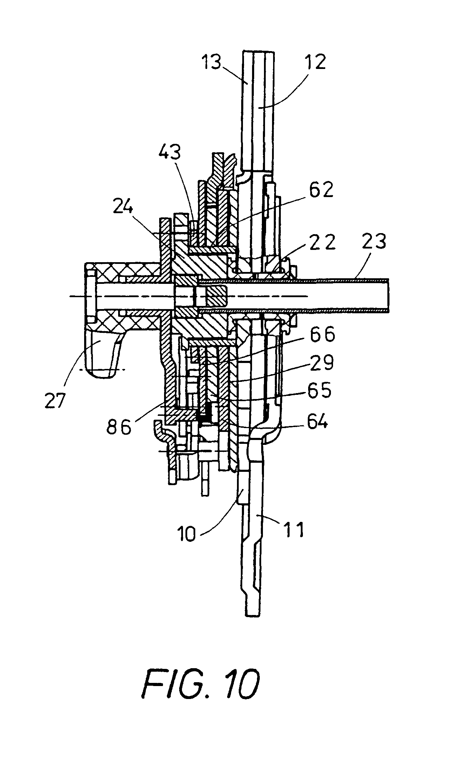

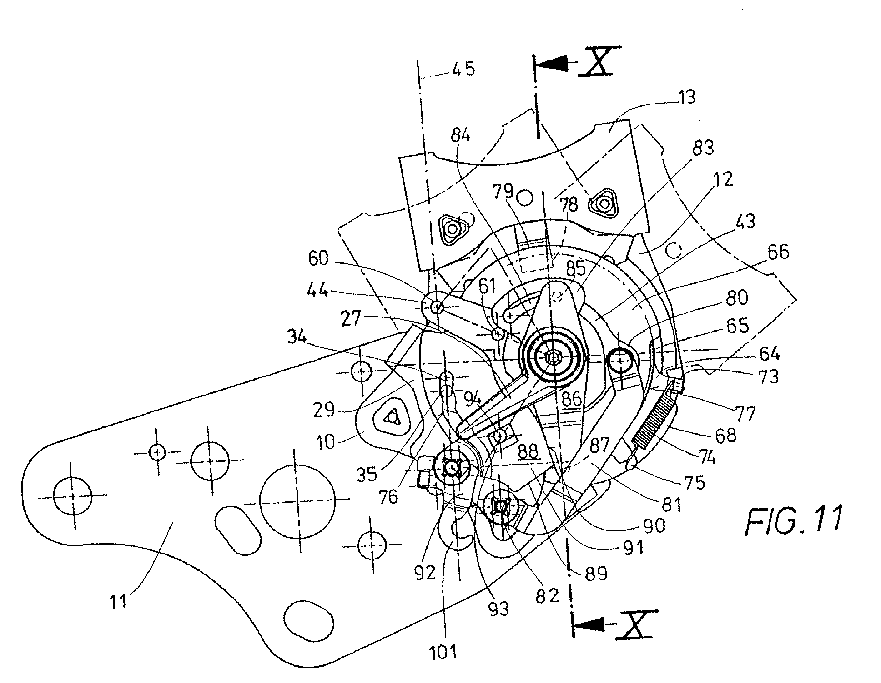

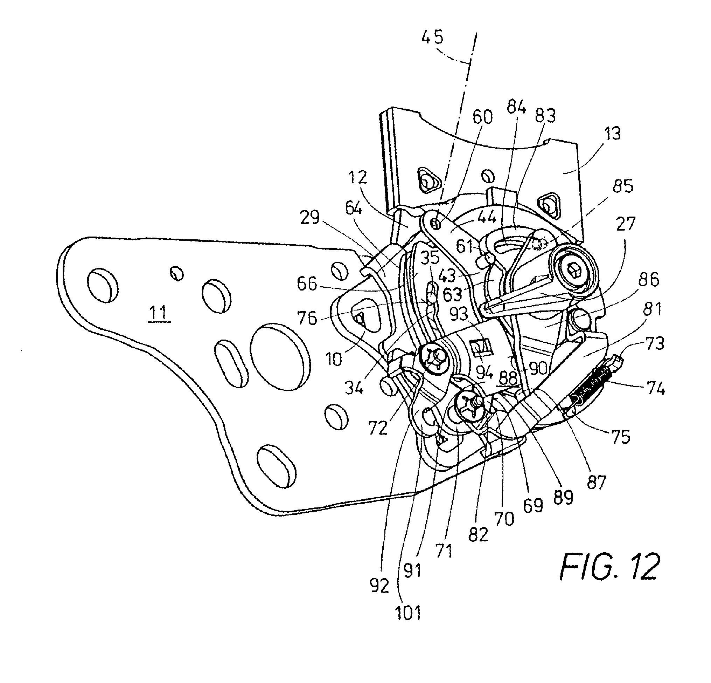

Bei dem in Fig. 10-13 dargestellten Ausführungsbeispiel des Rastbeschlages besteht dieser wiederum aus einem festen Beschlagteil 10, der mit einer Befestigungslasche 11 fest verbunden ist, die ihrerseits an den nicht dargestellten Sitzteilrahmen des Fahrzeugsitzes angeschlossen wird. An diesem festen Beschlagteil 10 stützt sich ein der Rückenlehne zugehöriger schwenkbarer Beschlagteil 12 ab, der seinerseits ebenfalls über eine mit dem Beschlagteil 12 verbundenen Anschlusslasche 13 an der ebenfalls nicht dargestellten Rückenlehne des Fahrzeugsitzes befestigt ist.

Zwischen den beiden Beschlagteilen ist die Lehneneinstelleinrichtung vorgesehen, deren Aufbau beispielsweise aus dem ersten Ausführungsbeispiel Fig. 2A entnehmbar ist. Wichtig ist, dass der schwenkbare Beschlagteil zum festen Beschlagteil und damit Lehnenteil zum Sitzteil im gesamten Schwenkbereich der Lehne feststellbar ist. Diese Einstellung sowie Lösung muss über die Übertragungsstange 23 auch auf den zweiten Sitzbeschlag übertragen werden. Diese Einstellung, die Lösung und die Feststellung erfolgt über den Auslöseadapter 24 bei seiner Drehung.

Die beiden Beschlagteile 10,12 sind mit einer Bohrung versehen, in die die zweiteilige Kragenbuchse 22 eingreift, an deren Außenumfang das feste und schwenkbare Beschlagteil 10 bzw. 12 gegeneinander verdrehbar sind.

Die Kragenbuchse 12 weist einen unrunden inneren Durchbruch auf, in dem die bei diesem Ausführungsbeispiel rohrförmige Übertragungsstange 23 drehfest mit der Kragenbuchse gelagert ist. Diese Übertragungsstange 23 führt zu dem zweiten Rastbeschlag eines Fahrzeugsitzes.

In Fortsetzung der Übertragungsstange 23 ist anschließend an die Kragenbuchse 22 der Auslöseadapter 24 vorgesehen. Dieser Auslöseadapter übergreift bereichsweise die Übertragungsstange und ist drehfest mit ihr verbunden. Der Auslöseadapter 23 trägt an seinem Außenumfang eine Hülse 62, hierbei stützt sich die Hülse mit ihren beiden Stirnseiten zum einen an dem Beschlagteil 10, zum anderen an einem Kragen 63 des Auslöseadapters 24 ab.

Auf dem Außenumfang der Hülse 62 ist drehbar eine Steuerscheibe 64, eine Sperrscheibe 65 und eine Kulissenscheibe 66 vorgesehen. Zwischen der Steuerscheibe 64 und dem beweglichen Beschlagteil 12 liegt die am festen Beschlagteil 10 festgelegte Grundplatte 29.

Die Steuerscheibe 64 trägt eine radial sich erstreckende segmentartige Verlängerung 68, in der ein zahnartiger Ausschnitt 69 vorgesehen ist. In diesen Ausschnitt 69 greift ein Zahn 70 einer Blockierklinke 71. Diese Blockierklinke ist auf einem Haltezapfen 72 schwenkbar gelagert, wobei der Haltezapfen 72 seinerseits fest an der Grundplatte 29 vorgesehen ist.

Es sei hier noch erwähnt, dass die Steuerscheibe 64 eine Abbiegung 73 aufweist, die als Lagerstelle einer Zugfeder 74 dient. Die andere Lagerstelle der Zugfeder 74 ist an einer Verlängerung 75 der Kulissenscheibe 66 vorgesehen.

Die Kulissenscheibe 66 ist mit einer Kulissenführung 76 versehen, in die der Zapfen 35 der Sperrklinke 34 eingreift. Die Sperrklinke 34 ist schwenkbar auf dem Lagerzapfen 33 vorgesehen. Dieser Lagerzapfen 33 ist an der Steuerscheibe 64 befestigt. Durch die Zugfeder 74 wird erreicht, dass Kulissenscheibe und Steuerscheibe durch die Feder gegeneinander belastet sind, so dass der Zapfen 35 in der Ausgangsstellung an einem Ende der Kulissenführung 76 vorgesehen ist. Die Sperrklinke 34 ist mit der Zahnklaue 36 versehen. Diese Zahnklaue 36 greift in die Stirnverzahnung 77 der Sperrscheibe 65.

In der Ausgangsstellung des Zapfens 35 in der Kulissenführung 76 greift die Zahnklaue 36 mit ihren Zähnen in die Stirnverzahnung 77 ein. In der anderen Endlage des Zapfens 35 ist die Zahnklaue von der Stirnverzahnung 77 abgehoben. Die Memoryeinrichtung: nämlich Sperrscheibe und schwenkbarer Beschlagteil, können gemeinsam verstellt werden, da die Sperrscheibe 65 an ihrem Umfang einen Ausschnitt 78 trägt, in den ein Sperrteil 79 der Anschlusslasche 13 eingreift. Bei einer Schwenkbewegung der Lehne wird daher die Sperrscheibe 65 mit bewegt. Bei der Einstellung der Memoryeinrichtung erfolgt keine Mitdrehung der Steuerscheibe 64 und der Kulissenscheibe 66. Mit der Drehung der Kulissenscheibe 66 wird lediglich die Schwenkmöglichkeit von Sperrscheibe 65 und Beschlagteil 12 freigegeben.

Bei der Freischwenkeinrichtung erfolgt eine Mitdrehung der Scheiben 64, 65 und 66.

Zwischen dem Kragen 63 des Auslöseadapters 24 und der Kulissenscheibe 66 ist die scheibenartige Schwinge 43 vorgesehen ist. Diese Schwinge trägt an dem Finger 44 die Befestigungsstelle 60 für das Bedienelement 45, das zur Freischwenkung der Rückenlehne vorgesehen ist.

Bei diesem Ausführungsbeispiel ist die Schwinge 43 noch mit einer in der Ebene der Schwinge 43 liegenden Ausbuchtung 80 versehen, an der eine Koppel 81 drehgelenkig angeordnet ist. Die zweite Gelenkstelle der Kuppel 81 ist an einem Festlegezapfen 82 gelenkig angebunden ist, der seinerseits an der Blockierklinke 71 befestigt ist. Bei Betätigung des Bedienelements 45 wird über die Koppel 81 die Blockierklinke 71 so verschwenkt, dass ihr Zahn 70 außer Eingriff mit dem zahnartigen Abschnitt 69 der Steuerscheibe 64 kommt. Bei einer Schwenkbewegung der Lehne gleitet dann dieser Zahn 70 am Außenumfang der Steuerscheibe 64, wobei das Bedienelement 45 bei diesem Ausführungsbeispiel freigegeben werden kann. Es ist also eine Freischwenkbewegung der Lehne möglich. Sobald die Rückwärtsbewegung eingeleitet wird, kann die Lehne soweit zurückbewegt werden, bis der Zahn 70 federnd in den zahnartigen Ausschnitt 69 fällt.

Die Schwinge 43 steht unter Federbelastung, da bei Einleitung der Drehbewegung der federbelastete Auslöseadapter 24 gedreht wird. Das Federglied 50 belastet den Auslöseadapter nach seiner Ausgangsstellung hin. Diese Federbelastung zieht über die Koppel 81 den Zahn 70 in den zahnartigen Ausschnitt 69 zurück, wenn bei der Rückschwenkung der Zahn an den zahnartigen Ausschnitt kommt.

Von diesem Kraftspeicher ist, wie schon erwähnt, auch der Auslöseadapter 24 beaufschlagt. Der Kraftspeicher wird durch das Federglied 50 der Lehnenverstellung gebildet. Hierzu sei folgendes vorgetragen. Bei Betätigung der Bedienvorrichtung 45 dreht sich die Schwinge 43. Hierzu ist am Fuße des Mitnahmefingers an der Schwinge 43 ein Mitnahmezapfen 61 vorgesehen. Bei Drehung der Schwinge 43 stößt der Mitnahmezapfen 61 (Auslösedaumen bei dem Ausführungsbeispiel bei den Fig. 1 - 9) gegen eine Verlängerung 83 des Auslöseadapterkragens 63. Hierdurch dreht sich Auslöseadapter 24 mit der Übertragungsstange 23. Durch die Drehung der Nockenscheibe 21 (Fig. 2 A) wird das Federglied 50 gespannt unter Entriegelung der Lehneneinstellung.

Der Kragen 63 des Auslöseadapters 24 ist noch mit einer radial verlaufenden Verlängerung 83 ausgestattet. Diese Verlängerung trägt eine bogenförmig verlaufende Ausnehmung 84. In diese Ausnehmung 84 greift ein Vorsprung 85 (Auslösefinger bei dem ersten Ausführungsbeispiel) eines drehfest mit dem Betätigungshebel 27 angeordneten plattenförmigen Zwischengliedes 86. Bei einer Schwenkbewegung des Betätigungsgliedes 27 gleitet hierbei der Vorsprung 85 in der bogenförmigen Ausnehmung 84 des Auslöseadapters und dreht diesen unter Spannen des Federgliedes 50 und Freigabe der Lehneneinstellung.

An dem dem Vorsprung 85 gegenüberliegenden anderen Ende des Zwischengliedes 86 ist ein Anschlag 87 vorgesehen. Der Anschlag 87 arbeitet mit einem als Winkelhebel 88 ausgebildeten Mitnahmehebels 95 zusammen, der schwenkbar auf dem Zapfen 72 für die Blockierklinke 71 angeordnet ist. Der Winkelhebel 88 weist auf seinem einen Schenkel 91 eine Steuerfläche 89 auf sowie eine Sperrfläche 90. Der andere Schenkel 92 ist mit einer Sperraufnahme 101 versehen.

Bei einer Drehung des Betätigungshebels 27 mit dem Zwischenglied 86 kommt der Anschlag 87 gegen die Steuerfläche 89. Der Winkelhebel 88 führt eine Drehbewegung derart aus, dass der zweite Schenkel 92 mit seiner Sperraufnahme 101 gegen den Festlegezapfen 82 der Koppel 81 liegt, so dass die Koppel 81 den Festlegezapfen 82 und damit die Blockierklinke 71 nicht bewegen kann. Auf diese Weise ist die Bewegung des Bedienelementes 45 blockiert, mit anderen Worten, eine Freischwenkung ist nicht möglich.

Durch eine Flügelfeder, die einerseits an dem Winkelhebel 88 angreift und andererseits an die Blockierklinke 71, ergibt sich eine Vorzugslage des Winkelhebels, mit anderen Worten, bei Freigabe des Betätigungsgliedes kommt der Anschlag 87 von der Steuerfläche 89 frei.

Nachzutragen bleibt hier noch, dass der Schenkel 91 des Winkelhebels 88 noch einen gegen die Kulissenscheibe 66 gerichteten Absatz 93 trägt, der mit einer Erhöhung 94 auf der Kulissenscheibe 66 derart zusammenarbeitet, dass diese bei Bewegung des Betätigungshebels 27 über die Steuerfläche 89 die Kulissenscheibe unter Spannung der Zugfeder 74 verdreht wird. Die Kulissenführung wird bewegt und es kommt die Sperrklinke 34 außer Eingriff mit der Verzahnung 77 der Sperrscheibe 65. Bei Schwenkung der Lehne kann die Memoryeinrichtung nun eine neue Position speichern. (Freigabe der Sperrscheibe durch die Sperrklinke, Mitdrehung der Sperrscheibe, dann Eingreifen der Sperrklinke in die Verzahnung der Sperrscheibe).

Zwischen dem festen Beschlagteil 10 und dem schwenkbaren Beschlagteil 11 wirkt eine starke Feder, die im Sinne einer Vorwärtsschwenkung der Lehne die Rückenlehne belastet, was bedeutet, dass, sobald das Bedienelement 45 für die Freischwenkung betätigt ist, die Feder die Lehne nach vorne nach der Sitzfläche hin belastet.

Diese Feder belastet den schwenkbaren Beschlagteil 12 und den festen Beschlagteil 10 auch dann, wenn die Memoryeinrichtung betätigt wird, was bedeutet, dass ein Benutzer auf dem Sitz durch Lösen des Betätigungshebels und anschließendem Vorbeugen oder Rückbiegen seines Oberkörpers die Lehneneinstellung verändern kann. Bei Freigabe des Betätigungshebels 27 bleibt diese Stellung dann in der Memoryeinrichtung gespeichert.

Wird das Bedienelement 45 bewegt, so wird die Blockierklinke verschwenkt. Dieser Schwenkbewegung folgt der Winkelhebel 88 mit, so dass nunmehr der Anschlag 87 des Zwischengliedes 86 gegen die Sperrfläche 90 zu liegen kommt, was bedeutet, dass nunmehr eine Lehneneinstellung über den Betätigungshebel 27 nicht möglich ist. Die Memoryeinrichtung kann in ihrer Einstellung nicht verändert werden.

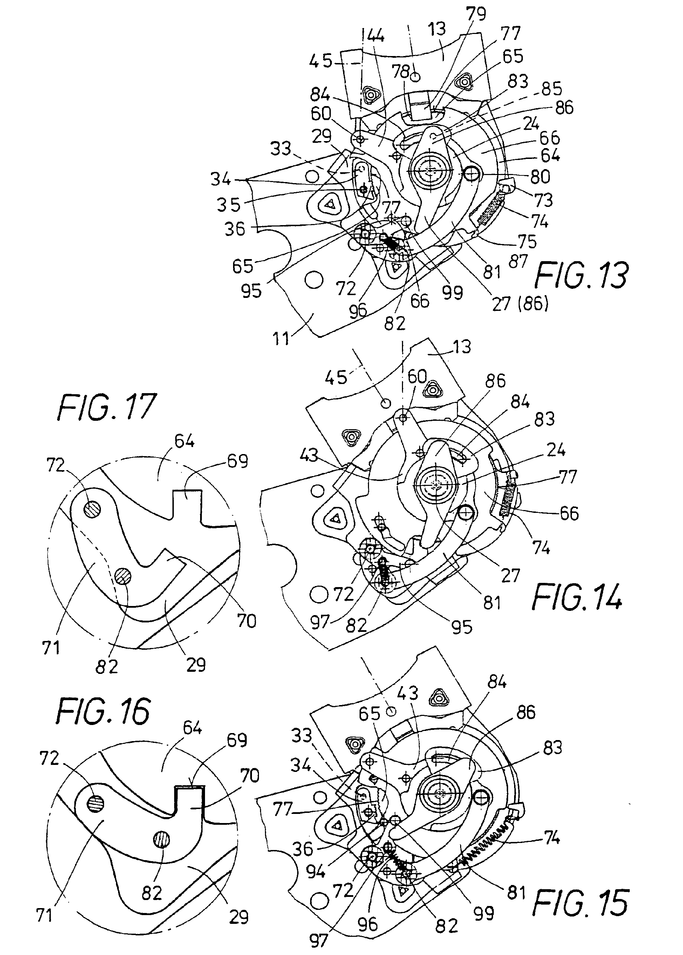

Statt des Winkelhebels 88 am Haltezapfen 72 der Blockierklinke 71 (Fig. 10 - 12) ist bei dem Ausführungsbeispiel der Fig. 13-15 ein einfacher schwenkbarer Mitnahmehebel 95 vorgesehen, der mittels einer Zugfeder 96 nach dem Festlegezapfen 82 der Blockierklinke 71 und der Koppel 81 belastet ist. Das zweite Ende der Zugfeder ist an den Mitnahmehebel bei einer Festlegestelle 97 angeordnet ist. Der Hebel 95 wird also immer in Richtung des Festlegezapfens 72 belastet. Der Mitnahmehebel 95 hat noch einen Zapfen 99. Dieser Zapfen liegt in der Bewegungsbahn des Zwischengliedes 86 des Betätigungshebels. Bei einer Weiterbewegung des Betätigungshebels wird dann der Mitnahmehebel gedreht und gegen die Erhöhung 94 auf der Kulissenscheibe stoßen und diese drehen, so dass die Zahnklaue 36 der Sperrklinke 34 außer Eingriff mit der Stirnverzahnung 77 der Sperrscheibe 65 kommt.

In dieser Stellung kann bei Betätigung des Bedienelementes 45 die Koppel 81 den Zahn 70 nur aus dem zahnartigen Ausschnitt herausführen, wenn die Kraft Zugfeder 96 überwunden wird. Andersherum ist auch zu sagen, dass bei der Freischwenkung und Betätigung des Bedienelementes der Mitnahmehebel mit der Erhöhung nicht in der Bewegungsbahn des Zwischengliedes liegt, so dass eine Bedienung der Sperrklinke nicht gegeben ist.

Der Unterschied zwischen den Ausführungsbeispielen Fig. 10 - 12 und Fig. 13 - 15 besteht im Wesentlichen darin, dass der spezielle Winkelhebel 88 durch einen allgemein ausgebildeten Mitnahmehebel 95 ersetzt ist.

In Fig. 13 ist die Ausgangsstellung des Rastbeschlages dargestellt. Wiederum liegt in der Ausgangsstellung der Zahn 70 der Blockierklinke 71 in dem zahnartigen Ausschnitt 69 der Steuerscheibe 64. Darüber hinaus liegt die Zahnklaue 36 der Sperrklinke 34 an der Stirnverzahnung 77 der Sperrscheibe 65. Der schwenkbare Beschlagteil 12 (Lehne) ist unbeweglich gegenüber dem festen Beschlagteil 10 (dem Sitzteil eines Fahrzeugsitzes).

In Fig. 14 ist das Bedienelement 45, das an der Lehne festgelegt ist, betätigt worden. Hierdurch verschwenkt die Schwinge 43 mit dem Mitnahmezapfen 61 die Adapterverlängerung 83 mit der bogenförmigen Ausnehmung. In diese greift der Vorsprung 85, der drehfest mit dem Betätigungshebel 27 des angeordneten Zwischengliedes 86 ist.

Wie bei dem vorherigen Ausführungsbeispiel ist die Schwinge 43 mit der Ausbuchtung 80 versehen, in die drehgelenkig die Koppel 81 eingreift, dessen zweite Gelenkstelle an dem Festlegezapfen 82 festgelegt ist, wobei dieser Festlegezapfen 82 an der Blockierklinke 71 befestigt ist, so dass bei einer Bewegung der Koppel 81 die Blockierklinke 71 mit ihrem Zahn 70 aus dem zahnartigen Ausschnitt 69 der Steuerscheibe herauskommt. Nunmehr kann der schwenkbare Beschlagteil 12 gegenüber dem festen Beschlagteil 10 verschwenkt werden. Die Lehne kann zur Sitzfläche des Kraftfahrzeugs bewegt werden, wobei eine starke Spiralfeder automatisch ein Sitzteil nach vorne bewegt. Der Zahn 70 gleitet bei dieser Schwenkbewegung auf der Mantelfläche der Steuerscheibe 64.

Wie schon erwähnt, kann bei diesem Ausführungsbeispiel das Bedienelement losgelassen werden, ohne dass die Freischwenkbewegung der Lehne gestoppt wird.

Auch kann die Rückbewegung eingeleitet werden. Diese erfolgt bis die federnd gelagerte Blockierklinke mit ihrem Zahn in die zahnartige Ausnehmung 69 eingreift. Falls das Bedienelement noch einmal belastet wird, kann dann beispielsweise eine Rückschwenkung der Lehne nach dem Hintersitz der Kraftfahrzeuge erfolgen. Selbstverständlich kann das Bedienelement auch bei der Rückwärtsbewegung gezogen bleiben.

Hier ist noch zu bemerken, dass der Festlegezapfen 82 eine Zugfeder 96 trägt, deren zweites Ende an dem Mitnahmehebel 95 an einer Festlegestelle 97 befestigt ist. Bei der Schwenkbewegung der Blockierklinke 71 wird der Mitnahmehebel 95 aus der Bewegungsbahn des Betätigungshebels 27 bewegt, so dass eine Verstellung der Memoryeinstellung der Rückenlehne des Kraftfahrzeugsitzes nicht mehr möglich ist.

Wird nun der Betätigungshebel 27, nachdem das Bedienelement 45 in seine Ausgangsstellung in Fig. 1, 11,12, oder 13 liegt, durch das Betätigungsglied 27 bewegt, das gegen einen Vorsprung 99 des Mitnahmehebels 85 liegt, stößt dieser gegen eine Erhöhung 94 der Kulissenscheibe 66, so dass bei einer weiteren Bewegung des Betätigungshebels die Kulissenscheibe gedreht wird. Der Zapfen 35, der in der Kulissenführung 76 vorgesehen ist, gleitet weiter in dieser Führung 76 und verschwenkt hierbei die Sperrklinke 34, so dass die Zahnklaue 36 der Sperrklinke 34 außer Eingriff mit der Stirnverzahnung der Sperrscheibe 65 kommt. Nunmehr kann die schwenkbare Rückenlehne derartig mit der Sperrscheibe 65 verdreht werden, dass die Zahnklinke 36 der Sperrklinke 34 an einer anderen Stelle der Stirnverzahnung 77 der Sperrscheibe angreift. Bei Freigabe des Betätigungsgliedes 27 schwenkt der Betätigungshebel in die in Fig. 13 dargestellte Stellung.

Zusammengefasst ist zu bemerken, dass bei der Freischwenkbewegung Steuerscheibe, Sperrscheibe und Kulissenscheibe gemeinsam bewegt werden, während bei Betätigung des Betätigungshebels 27 - Einstellung der Memoryeinrichtung - die Kulissenscheibe sich alleine dreht. Wird die Lehne dann verschwenkt, so dreht sich die Sperrscheibe mit, während die Steuerscheibe und dann die Sperrklinke in ihrer eingenommenen Lage verbleibt.

In Fig. 16 ist die Eingriffsstellung des Zahnes 70 in den zahnartigen Ausschnitt 69 gezeigt. Diese Stellung gilt als Ausgangsstellung sowohl für die Freischwenkbewegung als auch für die Memoryeinrichtung (Fig. 13). Je nach Wahl können die beiden Einstellungen entweder Freischwenkeinstellung oder Memoryeinstellung eingeleitet werden.

Wird das Bedienelement 45 betätigt zur Freischwenkung, so bewegt sich die Schwinge 43 unter Mitnahme des Auslöseadapter 24. Die Koppel 81 überführt die Blockierklinke 71 in die in Fig. 17 dargestellte Lage (siehe Fig. 14). Der schwenkbare Beschlagteil und damit die Lehne kann in beiden Schwenkrichtungen bewegt werden. Bei Freigabe des Bedienelementes fällt der Zahn 70 bei der Schwenkung in die zahnartige Ausnehmung 69 (Fig. 16). Wie Fig. 14 noch zeigt, ist der Mitnahmehebel 95 nicht in der Bewegungsbahn des Betätigungshebel 27 angeordnet. Ausgehend von der Fig. 13 gezeigten Ausgangslage wird bei einer Bewegung des Betätigungshebels 27 wiederum der Auslöseadapter 24 bewegt. Das Betätigungsglied 27 verschwenkt den federbelasteten Mitnahmehebel 95. Dieser stößt gegen die Erhöhung 94 der Kulissenscheibe 66 und dreht diese. Durch die Kulissenführung 76 kommt die Sperrklinke 34 mit ihrer Zahnklaue 36 frei von der Stirnverzahnung 77 der Sperrklinke 65 (siehe Fig. 15). Die Lehne kann mit der Sperrscheibe verdreht werden. Bei Freigabe des Betätigungshebels 27 ist diese Stellung der Lehne gespeichert, da die Sperrklinke wieder in die Stirnverzahnung eingreift. Von dieser neuen Stellung könnte wieder eine Freischwenkung vorgenommen werden.

Neben dem Betätigungshebel 27 bilden die Sperrscheibe 65 und die Kulissenscheibe 66 die primären Bauteile der Memoryeinrichtung

Neben dem Bedienelement 45 bilden die Schwinge 43, die Blockierklinke 71 mit Zahn 70 und die Steuerscheibe 64 die primären Bauteile der Freischwenkeinrichtung.

Wie bereits erwähnt, geben die dargestellte und vorbeschriebenen Ausführungen den Erfindungsgegenstand nur beispielsweise wieder, der keinesfalls allein darauf beschränkt ist. So ist es möglich, jede Art einer durch einen Rastbeschlag vorzunehmenden Lehneneinstellvorrichtung in Kombination mit der Memoryeinrichtung und der Freischwenkvorrichtung zu verwenden. Darüber hinaus sind noch mancherlei Änderungen und andere Ausgestaltungen des Erfindungsgegenstandes denkbar. Ferner sind alle aus der Beschreibung und aus den Zeichnungen ersichtlichen Merkmale erfindungswesentlich, auch wenn sie in den Ansprüchen nicht ausdrücklich beansprucht sind.

### Bezugszeichenliste:

- 10: Beschlagteil, fest
- 11: Befestigungslasche an 1o
- 12: Beschlagteil, schwenkbar
- 13: Anschlusslasche an 12

- 14: Stützscheibe
- 15: Ringansatz
- 16: Führungsansatz an 12
- 17: Riegel
- 18: Steuerzapfen an 17
- 19: Steuerschlitz von 20
- 20: Mitnehmerscheibe

- 21: Nockenscheibe
- 22: Kragenbuchse
- 23: Übertragungsstange
- 24: Auslöseadapter
- 25: Auslösefinger an 24
- 26: Auslösedaumen an 24
- 27: Betätigungshebel für Lehneneinstellung
- 28: Steueransatz
- 29: Grundplatte
- 30: Anschlagscheibe
- 31: Sperrsegment an 30
- 32: Endfläche an 31
- 33: Lagerzapfen
- 34: Sperrklinke
- 35: Zapfen an 34
- 36: Zahnklaue von 34
- 37: Blattfeder
- 38: Ringfeder
- 39: Haltevorsprung
- 40: Deckplatte
- 41: Hohlraum
- 42: Anschlag
- 43: Schwinge
- 44: Mitnahmefinger von 43
- 45: Bedienelement für Freischwenkbewegung
- 46: Verbindungsniet
- 47: Kulissenhebel
- 48: Kulisse von 47
- 49: Steuerkurve an 47
- 50: Federglied
- 51: Pfeil
- 52: Sperrnase
- 53: Anschlagwinkel
- 54: Pfeil
- 60: Befestigungsstelle für 45
- 61: Mitnahmezapfen
- 62: Hülse
- 63: Kragen an 24
- 64: Steuerscheibe
- 65: Sperrscheibe

- 66: Kulissenscheibe
- 68: segmentartige Verlängerung
- 69: zahnartiger Ausschnitt an 64
- 70: Zahn von 71
- 71: Blockierklinke
- 72: Haltezapfen für 71
- 73: Abbiegung von 60
- 74: Zugfeder
- 75: Verlängerung von 66
- 76: Kulissenführung
- 77: Stirnverzahnung an 65
- 78: Ausschnitt von 65
- 79: Sperrteil an 13
- 80: Ausbuchtung
- 81: Koppel
- 82: Festlegezapfen an 71
- 83: Verlängerung an 63
- 84: bogenförmige Ausnehmung
- 85: Vorsprung für 84
- 86: plattenförmiges Zwischenglied
- 87: Anschlag an 86
- 88: Winkelhebel
- 89: Steuerfläche
- 90: Sperrfläche
- 91: Schenkel für 89, 90
- 92: Schenkel von 88
- 93: Absatz von 91
- 94: Erhöhung an 66
- 95: Mitnahmehebel
- 96: Zugfeder
- 97: Festlegestelle
- 99: Vorsprung an 95
- 101: Sperraufnahme

## Patentansprüche

1. Rastbeschlag für einen Fahrzeugsitz, insbesondere für einen Kraftfahrzeugsitz, mit einem dem Sitzteil zugehörigen, festen Beschlagteil (10) und einem gegenüber diesem schwenkbar gelagerten, der Rückenlehne zugehörigen Beschlagteil (12), wobei an einem Beschlagteil wenigstens ein in radialer Richtung in und außer Sperrlage mit dem anderen Beschlagteil bringbarer Riegel (17) vorgesehen ist, der zusammen mit Übertragungsgliedern eine Lehneneinstellvorrichtung (17,20,21) bildet, die mit einem Betätigungshebel (27) in Wirkverbindung ist, und wobei
der Lehneneinstellvorrichtung (17, 20, 21) eine Memoryeinrichtung (30, 31, 34, 37; 34, 65, 66) zur Speicherung einer gewünschten einstellbaren Rückenlehnenneigung zugeordnet ist, **gekennzeichnet durch** eine **durch** ein separates Bedienelement (45) auslösbare Freischwenkvorrichtung (43, 47; 64, 70, 71).

2. Rastbeschlag nach Anspruch 1, **dadurch gekennzeichnet, dass** die Memoryeinrichtung (30, 31, 34; 37, 34, 65, 66) und die Freisschwenkvorrichtung (43, 47; 64, 71) an einer der Außenseiten der beiden zwischen sich die Lehneneinstellvorrichtung (17, 20, 21) einschließenden Beschlagteile (10, 12) vorgesehen sind.

3. Rastbeschlag nach Anspruch 1 oder 2, **dadurch gekennzeichnet, dass** die Memoryeinrichtung (30, 31, 34, 37; 34, 65, 66) und Freischwenkvorrichtung (43,47; 64, 70, 71) außerhalb des Kraftübertragungsflusses von dem schwenkbaren Beschlagteil (12) auf den festen Beschlagteil (10) vorgesehen sind.

4. Rastbeschlag nach einem der Ansprüche 1 bis 3, **dadurch gekennzeichnet, dass** die Memoryeinrichtung (30, 31, 34, 37; 34, 65, 66) und die Freischwenkvorrichtung (43, 47; 64, 70, 71) als Einheit an die Außenseite des Beschlagteiles (10, 12) anbaubar ist.

5. Rastbeschlag nach einem der Ansprüche 1 bis 4, **dadurch gekennzeichnet, dass** die Memoryeinrichtung aus einer Anschlagscheibe (30; 65) und einer diese festsetzenden Sperrklinke (34) gebildet ist, und die drehgelagerte und im Sperrsinne belastete Sperrklinke (34) durch den auch die Lehneneinstellvorrichtung auslösenden Betätigungshebel (27) entriegelbar ist.

6. Rastbeschlag nach Anspruch 5, **dadurch gekennzeichnet, dass** die Anschlagscheibe (30) im Vorschwenksinne der Rückenlehne kraftspeicherbelastet ist und die Sperrklinke (34) in Bezug auf den festen Beschlagteil (10) ortsfest drehgelagert und im Sperrsinne federbelastet ist.

7. Rastbeschlag nach einem der Ansprüche 1 bis 6, **dadurch gekennzeichnet, dass** der Betätigungshebel (27) an einem Auslöseadapter (24) angeschlossen ist, und der Auslöseadapter (24) in drehfester Verbindung mit den Übertragungsgliedern (22, 23) der Lehneneinstellvorrichtung (17, 20, 21) steht.

8. Rastbeschlag nach einem der Ansprüche 1 bis 7, **dadurch gekennzeichnet, dass** am Auslöseadapter (24) ein mit dem Betätigungshebel (27) in Kontakt bringbarer Auslösefinger (25) und ein von einer durch das separate Bedienelement (45) betätigbaren Schwinge (43) beaufschlagbarer Auslösedaumen (26) angeordnet ist.

9. Rastbeschlag nach einem der Ansprüche 1 bis 8, **dadurch gekennzeichnet,**
**dass** drehfest am Betätigungsglied (27) ein mit dem Auslöseadapter (24) in Kontakt bringbarer als Auslösefinger (25) dienender Anschlag (85) angeordnet ist und dass eine durch das separate Bedienelement (45) betätigbare Schwinge (43) mit einem als Auslösedaumen (26) dienender Mitnahmezapfen (61) am Auslöseadapter (24) angreift.

10. Rastbeschlag nach Anspruch 9, **dadurch gekennzeichnet, dass** der Betätigungshebel (27) einen Steueransatz (28) aufweist, der bei seiner Lösebewegung einen an einer Schwinge (43) angelenkten Kulissenhebel (47) im Sinne einer Lösung der mit dem Kulissenhebel (47) wirkverbundenen Sperrklinke (34) bewegt.

11. Rastbeschlag nach einem der Ansprüche 1 bis 10, **dadurch gekennzeichnet, dass** der Betätigungshebel (27) drehfest einen als Steueransatz dienenden Anschlag (87) aufweist, der bei seiner Lösebewegung über einen Mitnahmehebel (88, 95) eine Kulissenscheibe (66) im Sinne einer Lösung der Sperrklinke (34) bewegt.

12. Rastbeschlag nach einem der Ansprüche 1 bis 11, **dadurch gekennzeichnet, dass** die an einer mit dem festen Beschlagteil (10) verbundenen Grundplatte (29) schwenkgelagerte Sperrklinke (34) mit einem Zapfen (35) in eine Kulisse (48) des Kulissenhebels (47) eingreift, der eine Steuerkurve (49) aufweist, über welche der Steueransatz (28) des Betätigungshebels (27) bei dessen Lösehub die Sperrklinke (34) auslöst.

13. Rastbeschlag nach einem der Ansprüche 1 bis 12, **dadurch gekennzeichnet, dass** die an der Steuerscheibe (64) schwenkbar gelagerte Sperrklinke (34) mit einem Zapfen (35) in eine Kulissenführung (76) einer Kulissenscheibe (66) eingreift, hierbei schwenkt die Kulissenführung die Sperrklinke (34) in ihre Freigabestellung.

14. Rastbeschlag nach einem der Ansprüche 1 bis 13, **dadurch gekennzeichnet, dass** die Grundplatte (29) einen Haltevorsprung (39) zur Begrenzung der im Vorschwenksinne erfolgenden Bewegung der Anschlagscheibe (30) infolge ihrer Federbelastung aufweist.

15. Rastbeschlag nach einem der Ansprüche 1 bis 14, **dadurch gekennzeichnet, dass** die an der Grundplatte (29) gelagerte Sperrklinke (34), die von dieser in Sperrlage gehaltene Anschlagscheibe (30) und der die Anschlagscheibe (30) unter Federbelastung haltende, als Ringfeder (38) gestaltete Kraftspeicher in einem zwischen der Grundplatte (30) und einer Deckplatte (40) gebildeten Hohlraum (41) angeordnet sind, wobei die Deckplatte (40) mit dem der Rückenlehne zugehörigen Beschlagteil (12) verbunden ist.

16. Rastbeschlag nach einem der Ansprüche 1 bis 15, **dadurch gekennzeichnet, dass** die Deckplatte (40) einen in den Schwenkweg der Anschlagscheibe (30) vorragenden Anschlag (42) zur Drehmitnahme der Anschlagscheibe (30) gegen deren Kraftspeicherbelastung beim Rückschwenken der Rückenlehne in die gewünschte Neigungslage zwecks Memory-Einstellung aufweist.

17. Rastbeschlag nach einem der Ansprüche 1 bis 16, **dadurch gekennzeichnet, dass** die Anschlagscheibe (30) ein außenverzahntes Sperrsegment (31) aufweist, dessen radial nach innen rückspringende Endflächen (32) Anlageabsätze für den Haltevorsprung (39) der Grundplatte (29) einerseits und den Anschlag (42) der Deckplatte (40) andererseits bilden.

18. Rastbeschlag nach einem der Ansprüche 1 bis 17, **dadurch gekennzeichnet, dass** bei Bewegung sowohl des Betätigungshebels (27) als auch des Bedienelementes (45) die Lehneneinstellvorrichtung (17,20,21) entriegelbar ist.

19. Rastbeschlag nach einem der Ansprüche 1 bis 18, **dadurch gekennzeichnet, dass** die Memoryeinrichtung durch eine Sperrscheibe (65) und eine Kulissenscheibe (66) gebildet ist, die die Sperrklinke (34) steuert, hierbei ist die Sperrscheibe (65) gemeinsame mit dem schwenkbaren Beschlagteil (12) bewegbar.

20. Rastbeschlag nach einem der Ansprüche 1 bis 19, **dadurch gekennzeichnet, dass** die Schwenkbewegung der Sperrklinke (34) über die eine drehbare Kulissenscheibe (66) steuerbar ist, hierbei greift ein entfernt von der Lagerstelle (33) der Sperrklinke (34) angeordneter Zapfen (35) in eine an der Kulissenscheibe (66) angeordnete Kulissenführung (76).

21. Rastbeschlag nach einem der Ansprüche 1 bis 2o, **dadurch gekennzeichnet, dass** die Kulissenscheibe (66) und eine die Schwenklagerstelle (33) für die Sperrklinke (34) aufweisende Steuerscheibe (64) durch eine Feder (74) in ihrer Drehbewegung gegeneinander verspannt gehalten sind.

22. Rastbeschlag nach einem der Ansprüche 1 bis 21, **dadurch gekennzeichnet, dass** der Betätigungshebel (27) drehfest ein Zwischenteil (86) trägt, das mit einem Vorsprung (85) in eine bogenförmige Ausnehmung (84) einer Verlängerung (83) des Auslöseadapters (24) zu dessen Mitdrehung eingreift und dass das Zwischenglied (86) einen Anschlag (87) aufweist, der einen Mitnahmehebel (88,95) bewegt, über den selber die Kulissescheibe (66) verdrehbar ist.

23. Rastbeschlag nach einem der Ansprüche 1 bis 22, **dadurch gekennzeichnet, dass** Sperrmittel (88, 95, 90, 101; 71, 81, 82) von einer Ausgangsstellung aus wahlweise nur eine der Betätigungsbewegungen für die Memoryeinrichtung oder die Freischwenkvorrichtung freigeben.

24. Rastbeschlag nach einem der Ansprüche 1 bis 23, **dadurch gekennzeichnet, dass** ein drei Stellungen - zwei Sperrstellungen und die Ausgangsstellung - einnehmender, schwenkbarer Mitnahmehebel (88,95) in den jeweiligen Sperrstellungen eine der Einstellungsbewegungen von Freischwenkvorrichtung oder Memoryeinrichtung sperrt, während in der Ausgangsstellung entweder Freischwenkvorrichtung oder Memoryeinrichtung betätigbar ist.

25. Rastbeschlag nach einem der Ansprüche 1 bis 24, **dadurch gekennzeichnet, dass** der Mitnahmehebel (88,95) schwenkbar an einem dem festen Beschlagteil (10) zugeordneten Haltezapfen (72) gelagert ist.

26. Rastbeschlag nach einem der Ansprüche 1 bis 25, **dadurch gekennzeichnet, dass** der Mitnahmehebel (95) als ein zwei Schenkel (91,92) aufweisender Winkelhebel (88) ausgebildet ist, der mit seinem einen Schenkel (91) die Bewegung der Freischwenkvorrichtung und mit dem anderen Schenkel (92) die Bewegung zur Betätigung der Memoryeinrichtung sperrt.

27. Rastbeschlag nach einem der Ansprüche 1 bis 26, **dadurch gekennzeichnet, dass** zur Steuerung der Freischwenkvorrichtung und der Memoryeinrichtung auf der Drehachse der Lehne axial nebeneinander drei drehbare Scheiben (64,65,66) vorgesehen sind, eine Steuerscheibe (64), eine Sperrscheibe (65) und eine Kulissenscheibe (66), dass die drehfest mit dem schwenkbaren Beschlagteil (12) verbundene Sperrscheibe (65) an ihrem Umfang mit einer Verzahnung (77) versehen ist, in die eine an einer schwenkbaren Sperrklinke (34) angeordnete Zahnklaue (36) eingreift, dass die Steuerscheibe (64) einerseits einen Lagerzapfen (33) für die Sperrklinke (34) aufweist und andererseits einen zahnartigen Ausschnitt (69) trägt, in die ein Zahn (70) einer um einen dem festen Beschlagteil (10) zugeordneten Haltezapfen (72) schwenkbaren Blockierklinke (71) eingreift und dass die Kulissenscheibe (66) mit einer Kulissenführung (76) ausgestattet ist, in die ein Zapfen (35) der Sperrklinke (34) eingreift, wobei Kulissenscheibe (66) und Steuerscheibe (64) gegeneinander unter Federspannung (74) stehen und verdrehbar sind.

28. Rastbeschlag nach einem der Ansprüche 1 bis 27, **dadurch gekennzeichnet, dass** die Kulissenscheibe (66) eine Erhöhung (94) trägt, gegen die der Ansatz (93) des Mitnahmehebels (88,95) zur Anlage kommt, um bei einer Schwenkung des Mitnahmehebels die Kulissenscheibe (66) gegenüber der Steuerscheibe (64) zu verdrehen.

29. Rastbeschlag nach einem der Ansprüche 1 bis 28, **dadurch gekennzeichnet, dass** bei der Freischwenkbewegung bei Freigabe des Bedienelementes (45) der Zahn (70) der Blockierklinke (71) unter Federkraft auf der Umfangsfläche der Steuerscheibe (64) ruht.

30. Rastbeschlag nach einem der Ansprüche 1 bis 29, **dadurch gekennzeichnet, dass** die Blockierklinke (71) einen Festlegezapfen (82) aufweist, an dem eine von dem Bedienelement (45) über eine Schwinge (43) betätigbare Koppel (81) gelenkig angeordnet ist zur Freigabe der Freischwenkbewegung.

31. Rastbeschlag nach einem der Ansprüche 1 bis 30, **dadurch gekennzeichnet, dass** der Festlegezapfen (82) als Anschlag für den zweiten Schenkel (92) des Winkelhebels (88) dient zur Sperrung der Bewegung der Blockierklinke (71).

32. Rastbeschlag nach einem der Ansprüche 1 bis 31, **dadurch gekennzeichnet, dass** die schwenkbare Blockierklinke (71) und der Mitnahmehebel (95) durch die Kraft einer Feder (96) aneinanderliegend gehalten sind.

33. Rastbeschlag nach einem der Ansprüche 1 bis 32, **dadurch gekennzeichnet, dass** der Mitnahmehebel (95) eine Führungsfläche (89) aufweist, die die Erhöhung (94) mit der Kulissenscheibe (66) bei Bewegung des Betätigungshebels (27) mitbewegt.

34. Rastbeschlag nach einem der Ansprüche 1 bis 33, **dadurch gekennzeichnet, dass** bei Bewegung des Betätigungshebels (27) der Anschlag (87) für die Memoryeinrichtung den Mitnahmehebel (95) verschwenkt zur Drehung der Kulissenscheibe (66) und dass zugleich der Vorsprung (85) des Zwischenhebels (86) des Betätigungsgliedes den Auslöseadapter bewegt.

35. Rastbeschlag nach einem der Ansprüche 1 bis 34, **dadurch gekennzeichnet, dass** bei der Freischwenkbewegung bei Belastung des Bedienelementes (45) über die gewählte Memorystellung hinaus die Lehne des Kraftfahrzeugsitzes über den gesamten Schwenkbereich bewegbar ist.

## Claims

1. Detent fitting for a vehicle seat, especially for a seat of a motor vehicle, with a stationary component (10) of the fitting belonging to the seat part and a component (12), which is pivotably supported with respect to the stationary part and which belongs to the backrest, where at least one locking bolt (17), which is mounted on one of the components of the fitting and which can be brought into and out of locking engagement in the radial direction with the other component of the fitting, is provided, which bolt cooperates with transmission elements to form a backrest adjusting mechanism (17, 20, 21), which is in working connection with an actuating lever (27), wherein a memory device (30, 31, 34, 37; 34, 65, 66) for storing a desired, adjustable backrest tilt angle and a free-pivoting mechanism (43, 47; 64, 70, 71), which can be released by a separate operating element (45), form parts of the backrest adjusting mechanism (17, 20, 21).

2. Detent fitting according to claim 1, **characterised in that** the memory device (30, 31, 34; 37, 34, 65, 66) and the free-pivoting mechanism (43, 47; 64, 71) are provided on one of the outside surface of the two fitting components (10, 12), which enclose between them the backrest adjusting mechanism (17, 20, 21).

3. Detent fitting according to claim 1 or 2, **characterised in that** the memory device (30, 31, 34, 37; 34, 65, 66) and the free-pivoting mechanism (43, 47; 64, 70, 71) are provided outside the path by which force is transmitted from the pivoting component (12) of the fitting to the stationary component (10) of the fitting.

4. Detent fitting according to one of claims 1 to 3, **characterised in that** the memory device (30, 31, 34, 37; 34, 65, 66) and the free-pivoting mechanism (43, 47; 64, 70, 71) can be attached as a unit to the outside surface of one of the fitting components (10, 12).

5. Detent fitting according to one of claims 1 to 4, **characterised in that** the memory device is formed by a stop disk (30; 65) and a detent pawl (34), which holds the disk in place, and **in that** the rotatably supported detent pawl (34), which is preloaded in the locking direction, can be unlocked by the actuating lever (27), which also releases the backrest adjusting mechanism.

6. Detent mechanism according to claim 5, **characterised in that** the stop disk (30) is preloaded by a stored-energy device in the forward pivoting direction of the backrest, and **in that** the detent pawl (34) is rotatably supported in a permanent position with respect to the stationary component (10) of the fitting and is spring-loaded in the locking direction.

7. Detent pawl according to one of claims 1 to 6, **characterised in that** the actuating lever (27) is connected to a release adapter (24), and **in that** the release adapter (24) is connected non-rotatably to the transmission elements (22, 23) of the backrest adjusting mechanism (17, 20, 21).

8. Detent fitting according to one of claims 1 to 7, **characterised in that** a release finger (25), which can be brought into contact with the actuating lever (27), and a release cog (26), which can be acted upon by a rocker arm (43) actuated by a separate operating element (45), are mounted on the release adapter (24).

9. Detent fitting according to one of claims 1 to 8, **characterised in that** a stop (85), which can be brought into contact with the release adapter (24) and which serves as a release finger (25), is mounted non-rotatably on the actuating member (27), and **in that** a rocker arm (43), which can be actuated by the separate operating element (45), has a driver stud (61) serving as a release cog (26), which acts on the release adapter (24).

10. Detent fitting according to claim 9, **characterised in that** the actuating lever (27) has a control projection (28), which during the release movement, moves a rocker (47) hinged to a rocker arm (43) so as to release the detent pawl (34), which is in working connection with the rocker (47).

11. Detent fitting according to one of claims 1 to 10, **characterised in that** the actuating lever (27) has a non-rotatably stop (87) serving as a control projection, which, during the release movement, acts on a driver lever (88, 95) to move a link disk (66) in the direction of the release of the detent pawl (34).

12. Detent fitting according to one of claims 1 to 11, **characterised in that** the detent pawl (34), which is pivotably supported on a base plate (29) connected to the stationary component (10) of the fitting, has a stud (35), which engages in a connecting member (48) of the rocker (47), the rocker having a radial cam (49), by means of which the control projection (28) of the actuating lever (27) releases the detent pawl (34) during the release stroke.

13. Detent fitting according to one of claims 1 to 12, **characterised in that** the detent pawl (34), which is supported pivotably on the disk cam (64), has a stud (35), which engages in a link guide (76) of a link disk (66), the link guide thus pivoting the detent pawl (34) into its released position.

14. Detent fitting according to claims 1 to 13, **characterised in that** the base plate (29) has a retaining projection (39) for limiting the pivoting movement of the stop disk (30) in the forward direction which occurs as a result of the spring-loading of the disk.

15. Detent fitting according to one of claims 1 to 14, **characterised in that** the detent pawl (34), which is supported on the base plate (29); the stop disk (30), which is held by the pawl in the locked position; and the stored-energy device, which is designed as an annular spring (38), which holds the stop disk (30) under spring tension, are arranged in an empty space (41) formed between the base plate (30) and a cover plate (40), where the cover plate (40) is connected to the fitting component (12) belonging to the backrest.

16. Detent fitting according to one of claims 1 to 15, **characterised in that** the cover plate (40) has a stop (42) projecting into the pivoting path of the stop disk (30) to carry the stop disk (30) along with it against the load being exerted on it by the stored-energy device when the backrest is being pivoted backward to the desired tilt angle for the purpose of setting the memory.

17. Detent fitting according to one of claims 1 to 16, **characterised in that** the stop disk (30) has an externally toothed locking segment (31), the radially inward-directed end surface (32) of which form contact shoulders for the retaining projection (39) of the base plate (29) on one side and for the stop (42) of the cover plate (40) on the other.

18. Detent fitting according to one of claims 1 to 17, **characterised in that** the backrest adjusting mechanism (17, 20, 21) can be unlocked upon the movement both of the actuating lever (27) and of the operating element (45).

19. Detent fitting according to one of claims 1 to 18, **characterised in that** the memory device is formed by a locking disk (65) and a link disk (66), which controls the detent pawl (34), where the locking disk (65) can be moved jointly with the pivoting component (12) of the fitting.

20. Detent fitting according to one of claims 1 to 19, **characterised in that** the pivoting motion of the detent pawl (34) can be controlled via the rotating link disk (66), in which case a stud (35) located at a point remote from the bearing point (33) of the detent pawl (34) engages in a link guide (76) provided on the link disk (66).

21. Detent pawl according to one of claims 1 to 20, **characterised in that** the link disk (66) and a disk cam (64), which has the pivoting support point (33) for the detent pawl (34), are held under tension in opposite directions of rotation by a spring (74).

22. Detent fitting according to one of claims 1 to 21, **characterised in that** the actuating lever (27) carries non-rotatably an intermediate part (86) with a projection (85), which engages in an arc-shaped opening (84) in an extension (83) of the release adapter (24) so as to rotate it concomitantly, and **in that** the intermediate member (86) has a stop (87), which moves a driver lever (88, 95), by means of which the link disk (66) itself can be rotated.

23. Detent fitting according to one of claims 1 to 22, **characterised in that** starting from a home position, locking means (88, 95, 90, 101; 71, 81, 82) release as selected only one of the actuating movements for the memory device or the free-pivoting mechanism.

24. Detent fitting according to one of claims 1 to 23, **characterised in that** a pivoting driver lever (88, 95), which can assume any one of three positions, i.e., one of two different locking positions or the home position, locks one of the adjusting movements, i.e., that of the free-pivoting mechanism or that of the memory device, when in the associated locking position, whereas, when the lever is in the home position, either the free-pivoting mechanism or the memory device can be actuated.

25. Detent fitting according to one of claims 1 to 24, **characterised in that** the driver lever (88, 95) is supported pivotably on a retaining stud (72) belonging to the stationary component (10) of the fitting.

26. Detent fitting according to one of claims 1 to 25, **characterised in that** the driver lever (95) is designed as an angle lever (88) with two sidepieces (91, 92), one of which sidepieces (91) blocks the movement of the free pivoting mechanism, while the other sidepiece (92) blocks the movement of the memory device.

27. Detent fitting according to one of claims 1 to 26, **characterised in that** three rotating disks (64, 65, 66), namely, a disk cam (64), a locking disk (65), and a link disk (66), are provided axially next to each other on the rotational axis of the backrest for the control of the free-pivoting mechanism and the memory device; **in that** the locking disk (65), connected non-rotatably to the pivoting component (12) of the fitting, is provided around its circumference with a set of teeth (77), with which a toothed claw (36) on a pivoting detent pawl (34) engages; **in that** the disk cam (64) has a bearing journal (33) for the detent pawl (34) on one side and a tooth-like opening (69) on the other side, in which a tooth (70) of a blocking catch (71), which can pivot around a retaining stud (72) assigned to the stationary component (10) of the fitting, engages; and **in that** the link disk (66) is equipped with a link guide (76), in which a stud (35) of the detent pawl (34) engages, where the link disk (66) and the disk cam (64) stand against each other under spring tension (74) and are rotatable.

28. Detent fitting according to one of claims 1 to 27, **characterised in that** the link disk (66) has an elevation (94), against which the projection (93) of the drive lever (88, 95) comes to rest, so that when the driver lever pivots, the link disk (66) is rotated with respect to the cam disk (64).

29. Detent fitting according to one of claims 1 to 28, **characterised in that** when the backrest is in the freely pivoting state and the operating element (45) is let go, the tooth (70) of the blocking catch (71) rests under spring-loaded tension on the circumferential surface of the disk cam (64).

30. Detent fitting according to one of claims 1 to 29, **characterised in that** the blocking catch (71) has a retaining stud (82) to which an activatable coupler (81) is hinged, the coupler releasing the free pivoting action when activated by the operating element (45) via a rocker arm (43).

31. Detent fitting according to one of claims 1 to 30, **characterised in that** the retaining stud (82) serves as a stop for the second sidepiece (92) of the angle lever (88) to block the movement of the blocking catch (71).

32. Detent fitting according to one of claims 1 to 31, **characterised in that** the pivoting blocking catch (71) and the driver lever (95) are held against each other by the force of a spring (96).

33. Detent fitting according to one of claims 1 to 32, **characterised in that** the driver lever (95) has a guide surface (89), which concomitantly moves the elevation (94) on the link disk (66) when the actuating lever (27) is moved.

34. Detent fitting according to one of claims 1 to 33, **characterised in that** when the actuating lever (27) is moved, the stop (87) for the memory device pivots the driver lever (95) and thus rotates the link disk (66), and **in that** at the same time the projection (85) on the intermediate lever (86) of the actuating member moves the release adapter.

35. Detent fitting according to one of claims 1 to 34, **characterised in that** during free pivoting movement that accompanies pressure on the operating element (45) the back of the vehicle seat is mobile beyond the selected memory position and throughout the entire pivot area.

## Revendications

1. Armature d'arrêt pour un siège de véhicule, en particulier pour un siège de véhicule automobile, avec une partie d'armature (10) fixe, appartenant à la partie d'assise, et une partie d'armature (12), appartenant au dossier, montée à pivotement par rapport à celle-ci, où, sur une partie d'armature, est prévu au moins un verrou (17), susceptible d'être mis en et hors de position de blocage en direction radiale avec l'autre partie d'armature, ledit verrou (17) formant, conjointement avec des organes de transmission, un dispositif de réglage de dossier (17, 20, 21), placé en liaison fonctionnelle avec un levier d'actionnement (27), et où
au dispositif de réglage de dossier (17, 20, 21), est associé un dispositif à mémoire (30, 31, 34, 37 ; 34, 65, 66) pour stocker en mémoire une inclinaison de dossier réglable souhaitée, **caractérisée par** un dispositif de pivotement libre (43, 47 ; 64, 70, 71), susceptible d'être déclenché à l'aide d'un élément de manoeuvre (45) séparé.

2. Armature d'arrêt selon la revendication 1, **caractérisée en ce que** le dispositif à mémoire (30, 31, 34 ; 37, 34, 65, 66) et le dispositif de pivotement libre (43, 47 ;64, 71) sont prévus sur l'une des faces extérieures des deux parties d'armature (10,12), incluant entre elles le dispositif de réglage du dossier (17, 20, 21).

3. Armature d'arrêt selon la revendication 1 ou 2, **caractérisée en ce que** le dispositif à mémoire (30, 31, 34 ;37, 34, 65, 66) et le dispositif de pivotement libre (43, 47 ; 64, 70, 71) sont prévus à l'extérieur du flux de transmission des efforts allant de la partie d'armature (12) pivotante à la partie d'armature (10) fixe.

4. Armature d'arrêt selon l'une des revendications 1 à 3, **caractérisée en ce que** le dispositif à mémoire (30, 31, 34 ; 37, 34, 65, 66) et le dispositif de pivotement libre (43, 47 ; 64, 70, 71) sont susceptibles d'être rapportés, sous forme d'ensemble, sur la face extérieure de la partie d'armature (10, 12).

5. Armature d'arrêt selon l'une des revendications 1 à 4, **caractérisée en ce que** le dispositif à mémoire est formé d'une rondelle de butée (30; 65) et d'un cliquet de blocage (34), fixant celle-ci, et le cliquet de blocage (34), monté à rotation et bloqué dans le sens du blocage, est déverrouillable au moyen du levier d'actionnement (27), déclenchant également le dispositif de réglage de dossier.

6. Armature d'arrêt selon la revendication 5, **caractérisée en ce que** la rondelle de butée (30) est sollicitée par accumulateur de force, dans le sens du pré-pivotement du dossier, et le cliquet de blocage (34) est monté à rotation de façon localement fixe par rapport à la partie d'armature (10) fixe et est sollicitée élastiquement dans le sens du blocage.

7. Armature d'arrêt selon l'une des revendications 1 à 6, **caractérisée en ce que** le levier d'actionnement (27) est raccordé à un adaptateur de déclenchement (24) et l'adaptateur de déclenchement (24) est en liaison assujettie en rotation envers les organes de transmission (22, 23) du dispositif de réglage de dossier (17, 20, 21).

8. Armature d'arrêt selon l'une des revendications 1 à 7, **caractérisée en ce que**, sur l'adaptateur de déclenchement (24), est disposé un doigt de déclenchement (25), susceptible d'être mis en contact avec le levier d'actionnement (27), et un pouce de déclenchement (26), susceptible d'être sollicité par une bascule (43), actionnable au moyen de l'élément de manoeuvre (45) séparé.

9. Armature d'arrêt selon l'une des revendications 1 à 8, **caractérisée en ce que**, de façon assujettie en rotation sur le levier d'actionnement (27), est disposée une butée (85), servant de doigt de déclenchement (25), susceptible d'être mis en contact avec l'adaptateur de déclenchement (24), et **en ce qu'**une bascule (43), actionnée par l'élément de manoeuvre (45) séparé, agit par un tourillon d'entraînement (61), servant de pouce de déclenchement (26), sur l'adaptateur de déclenchement (24).

10. Armature d'arrêt selon la revendication 9, **caractérisée en ce que** le levier d'actionnement (27) présente un appendice de commande (28) qui, lors de son déplacement de désolidarisation, déplace un levier à coulisse (47) articulé sur une bascule (43), dans le sens d'une désolidarisation du cliquet de blocage (34), relié fonctionnellement au levier à coulisse (47).

11. Armature d'arrêt selon l'une des revendications 1 à 10, **caractérisée en ce que** le levier d'actionnement (27) présente, de façon assujettie en rotation, une butée (87) servant d'appendice de commande et déplaçant, lors de son mouvement de désolidarisation, par l'intermédiaire d'un levier d'entraînement (88, 95), un disque à coulisse (66), dans le sens d'une désolidarisation du cliquet de blocage (34).

12. Armature d'arrêt selon l'une des revendications 1 à 11, **caractérisée en ce que** le cliquet de blocage (34), monté à pivotement sur une plaque de base (29), reliée à la partie d'armature (10) fixe, s'engage, par un tourillon (35), dans une coulisse (48) du levier de coulisse (47), qui présente une came de commande (49), par l'intermédiaire de laquelle l'appendice de commande (28) du levier d'actionnement (27), lors de sa course de désolidarisation, déclenche le cliquet de blocage (34).

13. Armature d'arrêt selon l'une des revendications 1 à 12, **caractérisée en ce que** le cliquet de blocage (34), monté à pivotement sur la came de commande (64), s'engage, par un tourillon (35), dans un guidage de coulisse (76) d'une rondelle de coulisse (66), le guidage de coulisse faisant en même temps pivoter le cliquet de blocage (34) à sa position de libération.

14. Armature d'arrêt selon l'une des revendications 1 à 13, **caractérisée en ce que** la plaque de base (29) présente une saillie de maintien (39), pour limiter le déplacement, se faisant dans le sens du pré-pivotement, de la rondelle de butée (30), par suite de sa sollicitation élastique.

15. Armature d'arrêt selon l'une des revendications 1 à 14, **caractérisée en ce que** le cliquet de blocage (34), monté sur la plaque de base (29), la rondelle de butée (30), maintenue à sa position de blocage, et l'accumulateur de force, maintenant la rondelle de butée (30) sous une sollicitation élastique et réalisé sous la forme de ressorts à bagues ou anneaux (38), sont disposés dans un espace creux (41), formé entre la plaque de base (29) et une plaque de couverture (40), la plaque de couverture (40) étant reliée à la partie d'armature (12) appartenant au dossier.

16. Armature d'arrêt selon l'une des revendications 1 à 15, **caractérisée en ce que** la plaque de couverture (40) présente une butée (42) pénétrant dans la course de pivotement de la rondelle de butée (30), pour assurer l'entraînement en rotation de la rondelle de butée (30), à l'encontre de sa sollicitation par l'accumulateur de force, lors du pivotement de rappel du dossier, à la position d'inclinaison souhaitée, dans un but de réglage à mémoire.

17. Armature d'arrêt selon l'une des revendications 1 à 16, **caractérisée en ce que** la rondelle de butée (30) présente un segment de blocage (31) à denture extérieure, dont les faces d'extrémité (32), en retrait radialement vers l'intérieur, forment des décrochements d'appui pour la saillie de maintien (39) de la plaque de base (29), d'une part, et la butée (42) de la plaque de couverture (40), d'autre part.

18. Armature d'arrêt selon l'une des revendications 1 à 17, **caractérisée en ce que** le dispositif de réglage de dossier (17, 20, 21) est déverrouillable dans le cas d'un déplacement, tant du levier d'actionnement (27) qu'également de l'élément de manoeuvre (45) .

19. Armature d'arrêt selon l'une des revendications 1 à 18, **caractérisée en ce que** le dispositif à mémoire est formé par une rondelle de blocage (65) et une rondelle de coulisse (66), commandant le cliquet de blocage (34), le cliquet de blocage (65) étant en même temps déplaçable conjointement avec la partie d'armature (12) pivotante.

20. Armature d'arrêt selon l'une des revendications 1 à 19, **caractérisée en ce que** le mouvement de pivotement du cliquet de blocage (34) est susceptible d'être commandé par une rondelle de coulisse (66) susceptible de tourner, un tourillon (35), disposé à distance du point de tourillonnement (33) du cliquet de blocage (34), s'engageant en même temps dans un guidage de coulisse (76), disposé sur la rondelle de coulisse (66).

21. Armature d'arrêt selon l'une des revendications 1 à 20, **caractérisée en ce que** la rondelle de coulisse (66) et une rondelle de commande (64), présentant le point de tourillonnement en pivotement (33) pour le cliquet de blocage (34), sont maintenues de façon serrée mutuellement à leur position de rotation, par un ressort (74)).

22. Armature d'arrêt selon l'une des revendications 1 à 21, **caractérisée en ce que** le levier d'actionnement (27) porte, de façon assujettie en rotation, une partie intermédiaire (86) s'engageant, par une saillie (85), dans un évidemment (84), à forme arquée, d'un prolongement (83) de l'adaptateur de déclenchement (24), afin d'assurer son entraînement en rotation conjoint, et **en ce que** l'organe intermédiaire (86) présente une butée (87), déplaçant un levier d'entraînement (88, 95), par l'intermédiaire duquel la rondelle de coulisse (66) est susceptible de tourner.

23. Armature d'arrêt selon l'une des revendications 1 à 22, **caractérisée en ce que** des moyens de blocage (88, 95, 90, 101 ; 71, 81, 82) libèrent, depuis une position initiale, au choix uniquement l'un des mouvements d'actionnement pour le dispositif à mémoire ou le dispositif à pivotement libre.

24. Armature d'arrêt selon l'une des revendications 1 à 23, **caractérisée en ce qu'** un levier d'entraînement (88, 95) pivotant, prenant trois positions - deux positions de blocage et la position initiale - aux positions de blocage respectives, bloque l'un des mouvements de réglage du dispositif de pivotement libre ou du dispositif à mémoire, tandis que, à la position initiale, soit le dispositif à pivotement libre, soit le dispositif à mémoire, est actionnable.

25. Armature d'arrêt selon l'une des revendications 1 à 24, **caractérisée en ce que** le levier d'entraînement (88, 95) est monté de façon pivotante sur un tourillon de maintien (72), associé à la partie d'armature (10) fixe.

26. Armature d'arrêt selon l'une des revendications 1 à 25, **caractérisée en ce que** le levier d'entraînement (95) est réalisé sous la forme de levier coudé (88) présentant deux branches (91, 92), le levier coudé, par une de ses branches (91), bloquant le mouvement du dispositif de pivotement libre et, par son autre branche (92), bloquant le mouvement servant à l'actionnement du dispositif à mémoire.

27. Armature d'arrêt selon l'une des revendications 1 à 26, **caractérisée en ce que**, pour la commande du dispositif à pivotement libre et du dispositif à mémoire, sur l'axe de rotation du dossier, sont prévues trois rondelles (64, 65, 66) susceptible de tourner, placées axialement les unes à côté des autres, une rondelle de commande (64), une rondelle de blocage (65) et une rondelle de coulisse (66), **en ce que** la rondelle de blocage (65), reliée de façon assujettie en rotation à la partie d'armature (12) pouvant pivoter, est munie sur sa périphérie d'une denture (77), dans laquelle s'engage une griffe dentée (36), disposée sur un cliquet de blocage (34) pivotant, **en ce que** la rondelle de commande (64), d'une part, présente un tourillon de palier (33) pour le cliquet de blocage (34) et, d'autre part, porte une découpure (69) du genre d'une dent, dans laquelle s'engage une dent (70) d'un cliquet de blocage (71) susceptible de pivoter autour d'un tourillon de maintien (72) associé à la partie d'armature (10) fixe, et **en ce que** la rondelle de coulisse (66) est munie d'un guidage de coulisse (76), dans lequel s'engage un tourillon (35) du cliquet de blocage (34), la rondelle de coulisse (66) et la rondelle de commande (64) étant placées l'une contre l'autre sous une contrainte élastique (74) et étant susceptibles de tourner l'une par rapport à l'autre.

28. Armature d'arrêt selon l'une des revendications 1 à 27, **caractérisée en ce que** la rondelle de coulisse (66) porte un bossage (94), contre lequel l'appendice (93) du levier d'entraînement (88, 95) vient en appui pour faire tourner la rondelle de coulisse (66) par rapport à la rondelle de commande (64) lors d'un pivotement du levier d'entraînement.

29. Armature d'arrêt selon l'une des revendications 1 à 28, **caractérisée en ce que**, lors du mouvement de pivotement libre, au déclenchement de l'élément de manoeuvre (45), la dent (70) du cliquet de blocage (71) repose sur la face périphérique de la rondelle de commande (64), sous l'action d'une force élastique.

30. Armature d'arrêt selon l'une des revendications 1 à 29, **caractérisée en ce que** le cliquet de blocage (71) présente un tourillon de fixation (82), sur lequel une bielle (81), actionnable par l'élément de manoeuvre (45), par l'intermédiaire d'une bascule (43), est disposée de façon articulée, afin de provoquer le déclenchement du mouvement de pivotement libre.

31. Armature d'arrêt selon l'une des revendications 1 à 30, **caractérisée en ce que** le tourillon de fixation (82) sert de butée à la deuxième branche (92) du levier coudé (88), afin de bloquer le déplacement du cliquet de blocage (71).

32. Armature d'arrêt selon l'une des revendications 1 à 31, **caractérisée en ce que** le cliquet de blocage (71) pivotant et le levier d'entraînement (95) sont maintenus en appui l'un sur l'autre, par la force d'un ressort (96).

33. Armature d'arrêt selon l'une des revendications 1 à 32, **caractérisée en ce que** le levier d'entraînement (95) présente une face de guidage (89), déplaçant conjointement le bossage (94) avec la rondelle de coulisse (66), lors du déplacement du levier d'actionnement (27).

34. Armature d'arrêt selon l'une des revendications 1 à 33, **caractérisée en ce que**, en cas du déplacement de levier d'actionnement (27), la butée (87) du dispositif à mémoire fait pivoter le levier d'entraînement (95) pour faire tourner la rondelle de coulisse (66) et **en ce que**, en même temps, la saillie (85) du levier intermédiaire (86) de l'organe d'actionnement déplace l'adaptateur de déclenchement.

35. Armature d'arrêt selon l'une des revendications 1 à 34, **caractérisée en ce que**, lors d'un mouvement de pivotement libre, en cas de chargement de l'élément de manoeuvre (45), en passant sur la position en mémoire sélectionnée, le dossier du siège de véhicule est déplaçable sur la totalité de la plage de pivotement.
